# EUROPEAN PATENT SPECIFICATION

(11) **EP 4 305 917 B1**
(45) Date of publication and mention of the grant of the patent: **15.07.2026**
(21) Application number: 21929622.5
(22) Date of filing: 12.03.2021
(51) Int. Cl.: H04W 76/00, H04W 36/36, H04W 36/38, H04W 40/22, H04B 7/04, H04B 7/155, H04W 36/06, H04W 36/00

(54) **HANDOVER TECHNIQUES ASSOCIATED WITH RECONFIGURABLE INTELLIGENT SURFACES**
ÜBERGABETECHNIKEN IM ZUSAMMENHANG MIT REKONFIGURIERBAREN INTELLIGENTEN OBERFLÄCHEN
TECHNIQUES DE TRANSFERT ASSOCIÉES À DES SURFACES INTELLIGENTES RECONFIGURABLES

(43) Date of publication of application: 17.01.2024
(73) Proprietor: QUALCOMM INCORPORATED, San Diego, California 92121-1714 (US)
(72) Inventor: ZHANG, Yu, San Diego, California 92121-1714 (US); GAAL, Peter, San Diego, California 92121-1714 (US); SAHRAEI, Saeid, San Diego, California 92121-1714 (US); LY, Hung Dinh, San Diego, California 92121-1714 (US); MUKKAVILLI, Krishna Kiran, San Diego, California 92121-1714 (US)
(74) Representative: Bardehle Pagenberg Partnerschaft mbB Patentanwälte Rechtsanwälte
(86) International application number: PCT/CN2021/080446
(87) International publication number: WO 2022/188147

(56) References cited:
- CN-A- 110 611 943
- CN-A- 112 272 384
- US-A1- 2021 051 658
- MAHYAR NEMATI ET AL: "RIS-Assisted Coverage Enhancement in Millimeter-Wave Cellular Networks", ARXIV.ORG, CORNELL UNIVERSITY LIBRARY, 201 OLIN LIBRARY CORNELL UNIVERSITY ITHACA, NY 14853, 16 July 2020 (2020-07-16), XP081721703
- YILDIRIM IBRAHIM; UYRUS ALI; BASAR ERTUGRUL: "Modeling and Analysis of Reconfigurable Intelligent Surfaces for Indoor and Outdoor Applications in Future Wireless Networks", IEEE TRANSACTIONS ON COMMUNICATIONS, IEEE SERVICE CENTER, PISCATAWAY, NJ. USA., vol. 69, no. 2, 3 November 2020 (2020-11-03), PISCATAWAY, NJ. USA. , pages 1290 - 1301, XP011838364, ISSN: 0090-6778, DOI: 10.1109/TCOMM.2020.3035391
- LI LIXIN; MA DONGHUI; REN HUAN; WANG DAWEI; TANG XIAO; LIANG WEI; BAI TONG: "Enhanced reconfigurable intelligent surface assisted mmWave communication: A federated learning approach", CHINA COMMUNICATIONS, CHINA INSTITUTE OF COMMUNICATIONS, PISCATAWAY, NJ, USA, vol. 17, no. 10, 1 October 2020 (2020-10-01), Piscataway, NJ, USA , pages 115 - 128, XP011818044, ISSN: 1673-5447, DOI: 10.23919/JCC.2020.10.008
- ZHOU RUYA, TANG WANKAI;LI XIAO;JIN SHI: "A Brief Survey of Mobile Communications through Reconfigurable Intelligent Surfaces", MOBILE COMMUNICATIONS, YIDONG TONGXIN ZAZHISHE, CN, vol. 44, no. 6, 15 June 2020 (2020-06-15), CN , pages 63 - 69, XP055894598, ISSN: 1006-1010, DOI: 10.3969/j.issn.1006-1010.2020.06.010

## Description

### FIELD OF TECHNOLOGY

The following relates to wireless communications, including handover techniques associated with reconfigurable intelligent surfaces.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal FDMA (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE). In some wireless communications systems, a base station may communicate with a UE using a reconfigurable intelligent surface (RIS). In some cases, methods for using such RISs to support communications between a UE and a base station may be improved.

CN 110611943A discloses a method and equipment for reselecting Relay UE (User Equipment), which are used for solving the problem in the prior art that one set of UE cannot be triggered to be reselected as the Relay UE.

Mayhar Nemati et al. disclose in "RIS-Assisted Coverage Enhancement in Millimeter-Wave Cellular Networks" discloses a study on the coverage of an RIS-assisted largescale mmWave cellular network using stochastic geometry.

### SUMMARY

The described techniques relate to improved methods, systems, devices, and apparatuses that support handover techniques associated with reconfigurable intelligent surfaces. Generally, the described techniques provide for a user equipment (UE) to receive information associated with one or more reconfigurable intelligent surfaces (RISs) (e.g., reconfigurable reflective surface) for the UE to use in performing a handover procedure. The UE may be communicating with a base station directly or via a RIS and may attempt a handover procedure to a RIS. In some cases, the UE may receive, from the base station (e.g., directly, or via a RIS), an indication of a degree of UE loading for at least one of a set of RISs that are configured to assist in communications between the UE and the base station. The UE may select (e.g., determine, identify) a first RIS for use in the communications between the UE and the base station based on the degree of UE loading of the first RIS. For example, the UE may select the RIS based on the first RIS having a low degree of UE loading, or a degree of UE loading below a threshold. The UE may transmit a signal to the base station via the first RIS. In some cases, the UE may receive, from the base station, an indication for the UE to use a different RIS than the first RIS. In some cases, the base station may transmit the indication if the loading at the first RIS is high or is above a threshold. The UE may receive an indication of a second RIS, different than the first RIS, to handover to or the UE may otherwise determine to handover to the second RIS to communicate with the base station. The UE may transmit a second signal to the base station via the second RIS based on the indication.

A method for wireless communications at a UE is described. The method may include receiving, from a base station, an indication of a degree of UE loading for at least one of a set of multiple reconfigurable reflective surfaces that are configured to assist in communications between the UE and the base station, determining a reconfigurable reflective surface of the set of multiple reconfigurable reflective surfaces for use in the communications between the UE and the base station based on the degree of UE loading of the determined reconfigurable reflective surface, and transmitting a signal to the base station via the determined reconfigurable reflective surface.

An apparatus for wireless communications is described. The apparatus may include a processor, memory coupled with the processor, and instructions stored in the memory. The instructions may be executable by the processor to cause the apparatus to receive, from a base station, an indication of a degree of UE loading for at least one of a set of multiple reconfigurable reflective surfaces that are configured to assist in communications between the UE and the base station, determine a reconfigurable reflective surface of the set of multiple reconfigurable reflective surfaces for use in the communications between the UE and the base station based on the degree of UE loading of the determined reconfigurable reflective surface, and transmit a signal to the base station via the determined reconfigurable reflective surface.

Another apparatus for wireless communications is described. The apparatus may include means for receiving, from a base station, an indication of a degree of UE loading for at least one of a set of multiple reconfigurable reflective surfaces that are configured to assist in communications between the UE and the base station, means for determining a reconfigurable reflective surface of the set of multiple reconfigurable reflective surfaces for use in the communications between the UE and the base station based on the degree of UE loading of the determined reconfigurable reflective surface, and means for transmitting a signal to the base station via the determined reconfigurable reflective surface.

A non-transitory computer-readable medium storing code for wireless communications at a UE is described. The code may include instructions executable by a processor to receive, from a base station, an indication of a degree of UE loading for at least one of a set of multiple reconfigurable reflective surfaces that are configured to assist in communications between the UE and the base station, determine a reconfigurable reflective surface of the set of multiple reconfigurable reflective surfaces for use in the communications between the UE and the base station based on the degree of UE loading of the determine reconfigurable reflective surface, and transmit a signal to the base station via the determine reconfigurable reflective surface.

Some examples of the method, apparatuses, and non-transitory computer-readable medium described herein may further include operations, features, means, or instructions for receiving a quantity of bits, a combination of the quantity of bits indicating the degree of UE loading.

In some examples of the method, apparatuses, and non-transitory computer-readable medium described herein, a first combination indicates an idle degree of UE loading, a second combination indicates a low degree of UE loading which may be greater than the idle degree of UE loading, a third combination indicates a medium degree of UE loading which may be greater than the low degree of UE loading, and a fourth combination indicates a high degree of UE loading which may be greater than the medium degree of UE loading.

Some examples of the method, apparatuses, and non-transitory computer-readable medium described herein may further include operations, features, means, or instructions for receiving a value indicating a number of UEs using each reconfigurable reflective surface of the at least one of the set of multiple reconfigurable reflective surfaces, the value indicating the degree of UE loading.

In some examples of the method, apparatuses, and non-transitory computer-readable medium described herein, receiving the indication of the degree of UE loading may include operations, features, means, or instructions for receiving a value for modifying, by the UE, a reference signal received power (RSRP) measurement associated with the at least one of the set of multiple reconfigurable reflective surfaces, the value based on the degree of UE loading of the at least one of the set of multiple reconfigurable reflective surfaces.

In some examples of the method, apparatuses, and non-transitory computer-readable medium described herein, receiving the indication of the degree of UE loading may include operations, features, means, or instructions for receiving an energy per resource element (EPRE) offset associated with using the at least one or the set of multiple reconfigurable reflective surfaces, a value of the EPRE offset based on the degree of UE loading of the at least one of the set of multiple reconfigurable reflective surfaces.

Some examples of the method, apparatuses, and non-transitory computer-readable medium described herein may further include operations, features, means, or instructions for receiving, from the base station, a reference signal including a sequence, where the sequence may convey the indication of the degree of UE loading.

In some examples of the method, apparatuses, and non-transitory computer-readable medium described herein, the reference signal may be a demodulation reference signal or may be included in a downlink control channel.

In some examples of the method, apparatuses, and non-transitory computer-readable medium described herein, a first sequence indicates an idle degree of UE loading, a second sequence indicates a low degree of UE loading, a third sequence indicates a medium degree of UE loading, and a fourth sequence indicates a high degree of UE loading.

Some examples of the method, apparatuses, and non-transitory computer-readable medium described herein may further include operations, features, means, or instructions for transmitting a reference signal to the reconfigurable reflective surface, where receiving the indication of the degree of UE loading may be based on transmitting the reference signal.

In some examples of the method, apparatuses, and non-transitory computer-readable medium described herein, receiving the indication of the degree of UE loading may include operations, features, means, or instructions for receiving a message including the indication of the degree of UE loading, the message being a downlink control information (DCI) message, a radio resource control (RRC) message, or a medium access control (MAC) control element (MAC-CE) message.

In some examples of the method, apparatuses, and non-transitory computer-readable medium described herein, determining the reconfigurable reflective surface may include operations, features, means, or instructions for identifying a degree of UE loading less than a high degree of UE loading from the indication and identifying the reconfigurable reflective surface associated with the degree of UE loading that may be less than the high degree of UE loading, where determining the reconfigurable reflective surface may be based on the determined reconfigurable reflective surface having the degree of UE loading that may be less than the high degree of UE loading.

In some examples of the method, apparatuses, and non-transitory computer-readable medium described herein, receiving the indication of the degree of UE loading may include operations, features, means, or instructions for receiving a reconfigurable reflective surface identifier associated with each degree of UE loading for the at least one of the set of multiple reconfigurable reflective surfaces included in the indication.

A method for wireless communications at a UE is described. The method may include transmitting a first signal to a base station via a first reconfigurable reflective surface, receiving, from the base station, an indication for the UE to use a different reconfigurable reflective surface than the first reconfigurable reflective surface, and transmitting a second signal to the base station via a second reconfigurable reflective surface based on the indication.

An apparatus for wireless communications is described. The apparatus may include a processor, memory coupled with the processor, and instructions stored in the memory. The instructions may be executable by the processor to cause the apparatus to transmit a first signal to a base station via a first reconfigurable reflective surface, receive, from the base station, an indication for the UE to use a different reconfigurable reflective surface than the first reconfigurable reflective surface, and transmit a second signal to the base station via a second reconfigurable reflective surface based on the indication.

Another apparatus for wireless communications is described. The apparatus may include means for transmitting a first signal to a base station via a first reconfigurable reflective surface, means for receiving, from the base station, an indication for the UE to use a different reconfigurable reflective surface than the first reconfigurable reflective surface, and means for transmitting a second signal to the base station via a second reconfigurable reflective surface based on the indication.

A non-transitory computer-readable medium storing code for wireless communications at a UE is described. The code may include instructions executable by a processor to transmit a first signal to a base station via a first reconfigurable reflective surface, receive, from the base station, an indication for the UE to use a different reconfigurable reflective surface than the first reconfigurable reflective surface, and transmit a second signal to the base station via a second reconfigurable reflective surface based on the indication.

In some examples of the method, apparatuses, and non-transitory computer-readable medium described herein, receiving the indication may include operations, features, means, or instructions for receiving a message including an indication of one or more reconfigurable reflective surfaces for the UE to switch to, each of the one or more reconfigurable reflective surfaces different than the first reconfigurable reflective surface.

A method for wireless communications at a base station is described. The method may include determining a degree of UE loading for at least one of a set of multiple reconfigurable reflective surfaces that are configured to assist in communications between the UE and the base station, transmitting, to a UE, an indication of the degree of UE loading for the at least one of the set of multiple reconfigurable reflective surfaces, and receiving a signal from the UE via a reconfigurable reflective surface from the set of multiple reconfigurable reflective surfaces.

An apparatus for wireless communications is described. The apparatus may include a processor, memory coupled with the processor, and instructions stored in the memory. The instructions may be executable by the processor to cause the apparatus to determine a degree of UE loading for at least one of a set of multiple reconfigurable reflective surfaces that are configured to assist in communications between the UE and the base station, transmit, to a UE, an indication of the degree of UE loading for the at least one of the set of multiple reconfigurable reflective surfaces, and receive a signal from the UE via a reconfigurable reflective surface from the set of multiple reconfigurable reflective surfaces.

Another apparatus for wireless communications is described. The apparatus may include means for determining a degree of UE loading for at least one of a set of multiple reconfigurable reflective surfaces that are configured to assist in communications between the UE and the base station, means for transmitting, to a UE, an indication of the degree of UE loading for the at least one of the set of multiple reconfigurable reflective surfaces, and means for receiving a signal from the UE via a reconfigurable reflective surface from the set of multiple reconfigurable reflective surfaces.

A non-transitory computer-readable medium storing code for wireless communications at a base station is described. The code may include instructions executable by a processor to determine a degree of UE loading for at least one of a set of multiple reconfigurable reflective surfaces that are configured to assist in communications between the UE and the base station, transmit, to a UE, an indication of the degree of UE loading for the at least one of the set of multiple reconfigurable reflective surfaces, and receive a signal from the UE via a reconfigurable reflective surface from the set of multiple reconfigurable reflective surfaces.

Some examples of the method, apparatuses, and non-transitory computer-readable medium described herein may further include operations, features, means, or instructions for transmitting a quantity of bits, a combination of the quantity of bits indicating the degree of UE loading.

In some examples of the method, apparatuses, and non-transitory computer-readable medium described herein, a first combination indicates an idle degree of UE loading, a second combination indicates a low degree of UE loading which may be greater than the idle degree of UE loading, a third combination indicates a medium degree of UE loading which may be greater than the low degree of UE loading, and a fourth combination indicates a high degree of UE loading which may be greater than the medium degree of UE loading.

In some examples of the method, apparatuses, and non-transitory computer-readable medium described herein, transmitting the indication of the degree of UE loading may include operations, features, means, or instructions for transmitting a value indicating a number of UEs using each reconfigurable reflective surface of the at least one of the set of multiple reconfigurable reflective surfaces, the value indicating the degree of UE loading.

In some examples of the method, apparatuses, and non-transitory computer-readable medium described herein, transmitting the indication of the degree of UE loading may include operations, features, means, or instructions for transmitting a value for modifying, by the UE, an RSRP measurement associated with the at least one of the set of multiple reconfigurable reflective surfaces, the value based on the degree of UE loading of the at least one of the set of multiple reconfigurable reflective surfaces.

In some examples of the method, apparatuses, and non-transitory computer-readable medium described herein, transmitting the indication of the degree of UE loading may include operations, features, means, or instructions for transmitting an EPRE offset associated with using the at least one or the set of multiple reconfigurable reflective surfaces, a value of the EPRE offset based on the degree of UE loading of the at least one of the set of multiple reconfigurable reflective surfaces.

Some examples of the method, apparatuses, and non-transitory computer-readable medium described herein may further include operations, features, means, or instructions for transmitting, to the UE, a reference signal including a sequence, where the sequence may convey the indication of the degree of UE loading.

In some examples of the method, apparatuses, and non-transitory computer-readable medium described herein, the reference signal may be a demodulation reference signal or may be included in a downlink control channel.

In some examples of the method, apparatuses, and non-transitory computer-readable medium described herein, a first sequence indicates an idle degree of UE loading, a second sequence indicates a low degree of UE loading, a third sequence indicates a medium degree of UE loading, and a fourth sequence indicates a high degree of UE loading.

Some examples of the method, apparatuses, and non-transitory computer-readable medium described herein may further include operations, features, means, or instructions for receiving a reference signal via the reconfigurable reflective surface, where transmitting the indication of the degree of UE loading may be based on receiving the reference signal.

In some examples of the method, apparatuses, and non-transitory computer-readable medium described herein, transmitting the indication of the degree of UE loading may include operations, features, means, or instructions for transmitting a message including the indication of the degree of UE loading, the message being a DCI message, an RRC message, or a MAC-CE message.

In some examples of the method, apparatuses, and non-transitory computer-readable medium described herein, transmitting the indication of the degree of UE loading may include operations, features, means, or instructions for transmitting a reconfigurable reflective surface identifier associated with each degree of UE loading for the at least one of the set of multiple reconfigurable reflective surfaces included in the indication.

A method for wireless communications at a base station is described. The method may include receiving a first signal from a UE via a first reconfigurable reflective surface, transmitting, to the UE, an indication for the UE to use a different reconfigurable reflective surface than the first reconfigurable reflective surface, and receiving a second signal from the UE via a second reconfigurable reflective surface based on the indication.

An apparatus for wireless communications is described. The apparatus may include a processor, memory coupled with the processor, and instructions stored in the memory. The instructions may be executable by the processor to cause the apparatus to receive a first signal from a UE via a first reconfigurable reflective surface, transmit, to the UE, an indication for the UE to use a different reconfigurable reflective surface than the first reconfigurable reflective surface, and receive a second signal from the UE via a second reconfigurable reflective surface based on the indication.

Another apparatus for wireless communications is described. The apparatus may include means for receiving a first signal from a UE via a first reconfigurable reflective surface, means for transmitting, to the UE, an indication for the UE to use a different reconfigurable reflective surface than the first reconfigurable reflective surface, and means for receiving a second signal from the UE via a second reconfigurable reflective surface based on the indication.

A non-transitory computer-readable medium storing code for wireless communications at a base station is described. The code may include instructions executable by a processor to receive a first signal from a UE via a first reconfigurable reflective surface, transmit, to the UE, an indication for the UE to use a different reconfigurable reflective surface than the first reconfigurable reflective surface, and receive a second signal from the UE via a second reconfigurable reflective surface based on the indication.

In some examples of the method, apparatuses, and non-transitory computer-readable medium described herein, transmitting the indication may include operations, features, means, or instructions for transmitting a message including an indication of one or more reconfigurable reflective surfaces for the UE to switch to, each of the one or more reconfigurable reflective surfaces different than the first reconfigurable reflective surface.

Some examples of the method, apparatuses, and non-transitory computer-readable medium described herein may further include operations, features, means, or instructions for determining a degree of UE loading associated with the first reconfigurable reflective surface, where transmitting the indication may be based on the degree of UE loading associated with the first reconfigurable reflective surface.

### BRIEF DESCRIPTION OF THE DRAWINGS

FIG. 1 illustrates an example of a wireless communications system that supports handover techniques associated with reconfigurable intelligent surfaces in accordance with aspects of the present disclosure.
FIGs. 2 and 3 illustrate examples of wireless communications systems that support handover techniques associated with reconfigurable intelligent surfaces in accordance with aspects of the present disclosure.
FIGs. 4 and 5 illustrate examples of process flows that support handover techniques associated with reconfigurable intelligent surfaces in accordance with aspects of the present disclosure.
FIGs. 6 and 7 show block diagrams of devices that support handover techniques associated with reconfigurable intelligent surfaces in accordance with aspects of the present disclosure.
FIG. 8 shows a block diagram of a communications manager that supports handover techniques associated with reconfigurable intelligent surfaces in accordance with aspects of the present disclosure.
FIG. 9 shows a diagram of a system including a device that supports handover techniques associated with reconfigurable intelligent surfaces in accordance with aspects of the present disclosure.
FIGs. 10 and 11 show block diagrams of devices that support handover techniques associated with reconfigurable intelligent surfaces in accordance with aspects of the present disclosure.
FIG. 12 shows a block diagram of a communications manager that supports handover techniques associated with reconfigurable intelligent surfaces in accordance with aspects of the present disclosure.
FIG. 13 shows a diagram of a system including a device that supports handover techniques associated with reconfigurable intelligent surfaces in accordance with aspects of the present disclosure.
FIGs. 14 through 17 show flowcharts illustrating methods that support handover techniques associated with reconfigurable intelligent surfaces in accordance with aspects of the present disclosure.

### DETAILED DESCRIPTION

In some wireless communications systems (e.g., systems implementing a massive multiple input-multiple output (MIMO) communication scheme), wireless devices may implement spatial division multiple access (SDMA) to increase signaling throughput. For example, a base station may use beamforming techniques to communicate with multiple user equipments (UEs) concurrently by using spatial dimensions provided by an environment. However, in some cases, physical proximity or environmental factors (e.g., interference, blockage) may impair beamforming communications between the base station and the multiple UEs. In some cases, to overcome such impairments, the base station may employ an active antenna unit (AAU) to act as a relay between the base station and the multiple UEs. The AAU may include one or more antenna ports, radio frequency (RF) chains, and power amplifiers. The AAU may allow the base station to increase spatial diversity, beamforming gain, and cell coverage. For example, the AAU may receive a beamformed communication from the base station, amplify the beamformed communication, and re-transmit the beamformed communication to a UE. As such, in comparison to receiving the beamformed communication directly from the base station, the UE may have a higher likelihood of successfully receiving the beamformed communication via the AAU. However, active components (e.g., RF chains, power amplifiers) used by the AAU to amplify signals may be associated with increased power consumption. For example, a power amplifier at the AAU may utilize a significant power overhead to amplify and re-transmit a received signal. Such power overhead may be undesirable and inefficient in some systems.

In some examples, the base station may employ a reconfigurable intelligent surface (RIS) (e.g., a reconfigurable reflective surface) that uses passive components (e.g., capacitors, resistors) to reflect incoming signals in one or more directions with a reduced power overhead. For example, the RIS may use a capacitor and a resistor to reflect a signal in a specific direction (e.g., instead of using a power amplifier to amplify and re-transmit the signal). As such, the RIS may increase cell coverage, spatial diversity, and beamforming gain while consuming less power than an AAU. In some aspects, the base station may dynamically configure the RIS to reflect an incoming signal in a specific direction. For example, the base station may configure the RIS to reflect a beamformed communication in a direction of a UE based on a location of the UE. Similarly, the UE may transmit a beamformed communication in a direction of the RIS based on a base station configuration or a UE selection. To effectively implement the RIS, the base station may indicate configuration information for the RIS to the UE. The configuration information may include a location of the RIS, an uplink reflection angle of the RIS, a downlink reflection angle of the RIS, or a combination thereof. In some examples, the base station may transmit, to the UE (e.g., via a RIS), configuration information for multiple RISs in a coverage area of the base station. The UE may select one of the multiple RISs to facilitate communication with the base station based on the configuration information for the multiple RISs. In some aspects, the UE may transmit, to the base station, feedback indicating the selected RIS.

The base station may communicate with multiple UEs via one or more RISs using RIS-division multiple access (RDMA). For example, the base station may subdivide a RIS into multiple subsets of elements and use different subsets of elements to communicate with different UEs. Additionally or alternatively, the base station may use multiple RISs distributed throughout the coverage area to communicate with the multiple UEs. In some examples, the base station may use multiple RISs to communicate with a single UE. For example, if a path between a UE and the base station using a first RIS is obstructed, experiences interference, or otherwise drops below a quality or signal strength threshold, the base station may use a second RIS to communicate with the UE via a different path (e.g., uplink path, or downlink path). As such, RDMA may provide increased spatial diversity, cell coverage, and throughput, among other benefits.

In some implementations, a UE may perform handover (e.g., transparent handover) from one RIS to another RIS, or from a base station to a RIS, in which a UE may not contend for use of a RIS and/or a base station may not be informed of which RIS the UE might use until the UE uses said RIS to communicate with the base station. As such, in some cases, multiple UEs may use the same RIS to communicate with the base station. If the UEs are assigned the same time and frequency resources, then the base station may be unable (e.g., or may use a large amount of overhead) to distinguish between the signals from the multiple UEs using the same RIS due to a lack of spatial suppression between the signals.

To improve RIS handover procedures, a UE may receive an indication from a base station (e.g., directly from the base station, or via a RIS) related to RIS handover. In some cases, the indication may encourage or direct the UE to use a different RIS than the RIS being used by the UE, or to not use one or more RISs the UE is neighboring, or to use a particular RIS. For example, the UE may receive, from the base station, an indication of a degree of UE loading for at least one of a set of RISs that are configured to assist in communications between the UE and the base station. The indication may indicate an idle degree of UE loading, a low degree of UE loading, a medium degree of UE loading, a high degree of UE loading, etc. The indication may indicate a number of UEs being served by a RIS, a penalty (e.g., an reference signal received power (RSRP) penalty) associated with using a RIS, or an offset (e.g., an energy per resource element (EPRE) offset) associated with using a RIS, or a combination thereof. The indication may implicitly or explicitly indicate the degree of UE loading. For example, a base station may use a reference signal sequence to implicitly indicate a degree of UE loading associated with a RIS.

The UE may select a first RIS for use in communicating with a base station based on the degree of UE loading of the first RIS. For example, the UE may select the first RIS based on the first RIS having a low degree of UE loading, or a degree of UE loading below a threshold. The UE may transmit a signal to the base station via the first RIS. In some cases, the UE may receive, from the base station, an indication for the UE to use a different RIS than the first RIS. In some cases, the base station may transmit the indication if the loading at the first RIS is high or is above a threshold. The UE may receive a second indication of a second RIS, different than the first RIS, to handover to or the UE may otherwise determine to handover to the second RIS to communicate with the base station. The UE may transmit a second signal to the base station via the second RIS based on the indication.

Particular aspects of the subject matter described herein may be implemented to realize one or more advantages. The described techniques may support improvements in a UE performing a handover procedure to handover to a RIS by improving reliability, and decreasing latency among other advantages. As such, supported techniques may include improved network operations and, in some examples, may promote network efficiencies, among other benefits.

Aspects of the disclosure are initially described in the context of wireless communications systems. Aspects are then described with reference to process flows. Aspects of the disclosure are further illustrated by and described with reference to apparatus diagrams, system diagrams, and flowcharts that relate to handover techniques associated with reconfigurable intelligent surfaces.

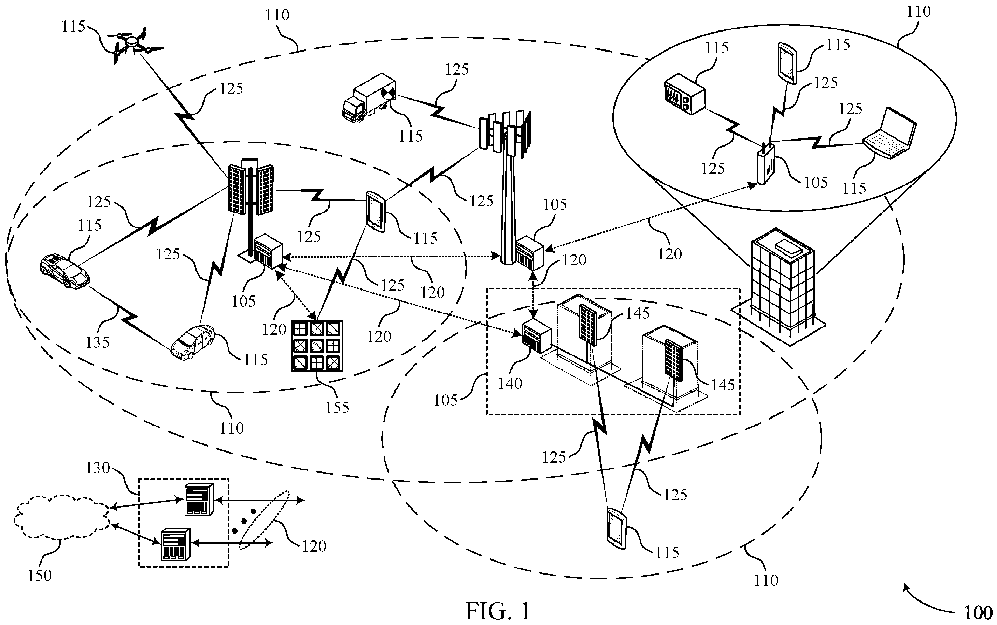

**FIG.** 1 illustrates an example of a wireless communications system 100 that supports handover techniques associated with reconfigurable intelligent surfaces in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may consist of one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

The time intervals for the base stations 105 or the UEs 115 may be expressed in multiples of a basic time unit which may, for example, refer to a sampling period of *Tₛ = fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f})* subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to IP services 150 for one or more network operators. The IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally or alternatively, an antenna panel may support radio frequency beamforming for a signal transmitted via an antenna port.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

A RIS 155 may be a near passive device that reflects incoming signals in a specific direction according to a configuration of the RIS 155. In some examples, the configuration of the RIS 155 may be preconfigured, statically or semi-statically configured, or configured by a network (e.g., configured by the base station 105). For example, the base station 105 may transmit a message to the RIS 155 configuring one or more elements of the RIS. The RIS 155 may include a processing component (e.g., a processor) that may determine a configuration for the RIS 155 (e.g., based on a message from the base station 105) and may adjust one or more parameters of the RIS 155 to support the configuration. For example, the RIS 155 may use one or more capacitors, resistors, and other passive components to reflect signals between the base station 105 and a UE 115 (e.g., rather than using active components to amplify and re-transmit the signals). The RIS may reflect the signals from a UE 115 via a communications link 125 (e.g., an over-the-air communications link 125, a wireless communications link 125). The RIS 155 may adjust the capacitors, resistors, or combination thereof to support a specific configuration for one or more elements of the RIS 155 (e.g., based on a configuration message from the base station 105). The RIS 155 may have a wired connection, such as a backhaul link 120, or a wireless connection, such as a communications link 125, with the base station 105 and may be located anywhere in the coverage area of the base station 105.

A UE 115 may receive, from a base station 105 (e.g., directly, or via a RIS 155), information associated with one or more RISs 155 for the UE 115 to use in performing a handover procedure. The UE 115 may be communicating with a base station 105 directly or via a RIS 155 and may attempt a handover procedure to a RIS 155. In some cases, the UE 115 may receive, from the base station (e.g., directly, or via a RIS 155), an indication of a degree of UE loading for at least one of a set of RISs 155 that are configured to assist in communications between the UE 115 and the base station 105. The UE 115 may select a first RIS 155 for use in the communications between the UE 115 and the base station 105 based on the degree of UE loading of the first RIS 155. For example, the UE 115 may select the first RIS 155 based on the first RIS 155 having a low degree of UE loading, or a degree of UE loading below a threshold. The UE 115 may transmit a signal to the base station 105 via the first RIS 155. In some cases, the UE 115 may receive, from the base station 105, an indication for the UE 115 to use a different RIS 155 than the first RIS 155. In some cases, the base station 105 may transmit the indication if the loading at the first RIS 155 is high or is above a threshold. The UE 115 may receive an indication of a second RIS 155, different than the first RIS 155, to handover to or the UE 115 may otherwise determine to handover to the second RIS 155 to communicate with the base station 105. The UE 115 may transmit a second signal to the base station 105 via the second RIS 155 based on the indication.

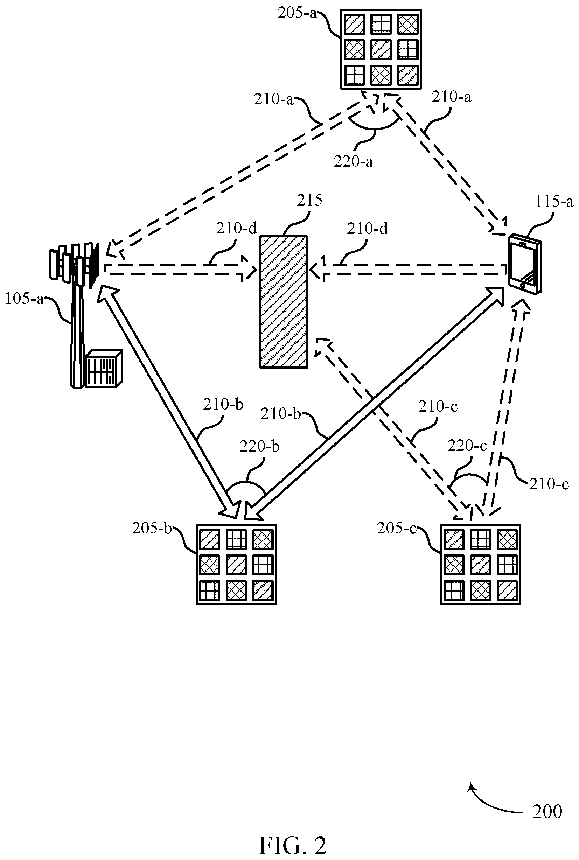

**FIG. 2** illustrates an example of a wireless communications system 200 that supports handover techniques associated with reconfigurable intelligent surfaces in accordance with aspects of the present disclosure. The wireless communications system 200 may include base station 105-a, UE 115-a, and RIS 205, which may be examples of a base station 105, a UE 115, and a RIS 155 as described with reference to FIG. 1. Base station 105-a may serve a geographic coverage area that may encompass UE 115-a, and RISs 205-a, 205-b, and 205-c. In some cases, base station 105-a may implement a RIS handover indication procedure with UE 115-a that may allow UE 115-a to efficiently perform a handover procedure to one or more RISs 205. Additionally or alternatively, other wireless devices, such as UE 115-a, may implement a same or similar RIS handover indication procedure. In some examples, the wireless communications system 200 may support multiple radio access technologies including 4G systems such as LTE systems, LTE-A systems, or LTE-A Pro systems, and 5G systems which may be referred to as NR systems. The wireless communications system 200 may also support improvements to power consumption, spectral efficiency, higher data rates and, in some examples, may promote enhanced efficiency for higher reliability and lower latency wireless communications (e.g., uplink transmissions), among other benefits.

In the example of FIG. 2, UE 115-a may perform communications with base station 105-a. For example, in the case that UE 115-a has a line-of-sight (e.g., an unobstructed) path to base station 105-a, UE 115-a and base station 105-a may communicate via communications link 210-d, such as a non-RIS based communications link 210, that may support uplink communications and/or downlink communications. In some cases, UE 115-a may be mobile (e.g., may move around a cell, or outside of a cell) and may, in some cases, move to a position in which the line-of-sight path from UE 115-a to base station 105-a may be obstructed, such as by obstruction 215 (e.g., object in nature, vehicle, building). In some cases, obstruction 215 may be mobile and may, in some cases, obstruct the line-of-sight path from UE 115-a to base station 105-a.

In such cases, base station 105-a and UE 115-a may perform wireless communications using one or more RIS 205, which may facilitate the wireless communications between base station 105-a and UE 115-a. In some examples, base station 105-a may configure UE 115-a according to a first transmission configuration indication (TCI) state supportive of indirect communication of downlink channel transmissions (e.g., a physical downlink control channel (PDCCH), a physical downlink shared channel (PDSCH)) and downlink reference signals (e.g., channel station information reference signals (CSI-RSs)) from base station 105-a. According to such configuration, UE 115-a may use a communications link, which may be a RIS-based communications link to communicate with base station 105-b via a RIS 205. For example, UE 115-a and base station 105-a may use RIS 205-a to communicate via communications link 210-a that may support uplink communications, and/or downlink communications. In another example, UE 115-a and base station 105-a may use RIS 205-b to communicate via communications link 210-b that may support uplink communications, and/or downlink communications. In another example, UE 115-a and base station 105-a may use RIS 205-c to communicate via communications link 210-c that may support uplink communications, and/or downlink communications.

One or more RISs 205 may be deployed in a coverage area served by a base station 105. Each RIS 205 may be the same size or may be different sizes, where size may refer to surface area of the RIS 205 and/or a number of elements included in the RIS 205. In some cases, the elements on one RIS 205 (e.g., a large RIS 205) may be divided into one or more subsets, where each subset may serve a different UE 115. Such subsets may include one or more adjacent elements, or one or more elements that are not adjacent to one another. In some cases, rather than multiple UEs 115 using the same RIS 205, each UE 115 may use a different RIS 205.

In the wireless communications system 200, a RIS 205 may be a near passive device that reflects incoming signals in a specific direction according to a configuration of the RIS 205. In some examples, the configuration of the RIS 205 may be preconfigured, statically or semi-statically configured, or configured by a network (e.g., configured by base station 105-a). For example, base station 105-a may transmit a message to a RIS 205 configuring one or more elements of the RIS 205. The RIS 205 may include a processing component (e.g., a processor) that may determine a configuration for the RIS 205 (e.g., based on a message from the base station 105-a) and may adjust one or more parameters of the RIS 205 to support the configuration. For example, the RIS 205 may use one or more capacitors, resistors, and other passive components to reflect (e.g., refract) signals between base station 105-a and UE 115-a (e.g., rather than using active components to amplify and re-transmit the signals). The RIS 205 may adjust the capacitors, resistors, or combination thereof to support a specific configuration for one or more elements of the RIS 205 (e.g., based on a configuration message from base station 105-a). The RIS 205 may have a wired connection or a wireless connection with base station 105-a and may be located anywhere in the coverage area of base station 105-a. In some cases, a RIS 205 may be configured based on transparent RIS-assisted MU-MIMO (e.g., based on RDMA), or non-transparent RIS-assisted MU-MIMO (e.g., based on RDMA). In such cases, UEs 115 (e.g., nearby or neighboring UEs 115) may be multiplexed with a spatially separated RIS 205, spatial dimensions may be configured dynamically by turning a RIS 205 on and off, and the behavior of a RIS 205 is predictable. In some cases, such as for non-transparent RIS-assisted MU-MIMO, MU-MIMO procedures may be configured to take advantage of the reconfigurability and predictability of the environment to support reliable communications using a RIS 205.

In some cases, a RIS 205 may be divided into multiple sub-RISs, where the sub-RISs may be placed next to each other or may be placed with space in between each sub-RISs. In some cases, the sub-RISs may be configured with a gradient configuration. As such, a base station 105 may provide the configuration to a UE 115 by indicating how the mapping between AoA and AoD changes between two adjacent or nearby sub-RISs.

Base station 105-a may determine the configuration of the RIS 205 based on, among other factors, a location of one or more UEs 115. For example, base station 105-a may adjust a reflection angle 220 (e.g., an uplink reflection angle) of a RIS 205 based on the location of UE 115-a so that a signal transmitted from UE 115-a is properly reflected to base station 105-a. In some aspects, using a RIS 205 (or multiple RISs 205) for wireless communications may extend the coverage area of base station 105-a and enable higher throughput in the wireless communications system 200. In some other aspects, using a RIS 205 (or multiple RISs 205) may provide for communications between the base station 105-a and the UE 115-a under conditions in which direct communications may be unreliable. For example, interference resulting from physical proximity or environmental factors, such as an obstruction 215 (e.g., blockage), may be avoided or mitigated by communicating via a RIS 205 (or multiple RISs 205).

In some cases, a UE 115, such as UE 115-a may receive signaling identifying, or UE 115-a may otherwise identify a set of RISs 205. In some cases, UE 115-a may be configured with the set of RISs 205 based on each RIS 205 in the set of RISs 205 being in a coverage area of base station 105-a, or based on each RIS 205 being within a proximity (e.g., a threshold proximity, a preconfigured proximity) to UE 115-a. For example, UE 115-a may identify RIS 205-a, 205-b, and/or 205-c and may identify a configuration associated with each RIS 205. In some examples, base station 105-a may transmit, to UE 115-a, a configuration of a set of multiple RISs 205 via a radio resource control (RRC) message. In some examples, the RRC message may indicate, to UE 115-a, configuration information for one or more RISs 205 in the wireless communications system 200. For example, the RRC message may include a field indicating a RIS location, a field indicating an uplink RIS reflection angle, a field indicating a downlink RIS reflection angle, a field indicating a RIS reflection angle 220 (e.g., if the RIS reflection behavior is reciprocal between uplink and downlink), a field indicating a RIS identifier, or some combination thereof. In some cases, the RRC message may include a reflection angle 220 that is based on the angle of arrival (AoA) and angle of departure (AoD) (e.g., *reflection angle =* 180 - *AoA - AoD*) associated with each RIS 205, or may include an AoA and/or an AoD associated with each RIS. If UE 115-a revives an AoA and AoD for each RIS 205, then UE 115-a may be configured to identify the reflection angle 220 for each RIS 205 based on the AoA and AoD for the RIS 205. In some examples, the RRC message may include a set of fields indicating RIS locations, a set of fields indicating uplink RIS reflection angles, a set of fields indicating downlink RIS reflection angles, a set of fields indicating reciprocal RIS reflection angles, a set of fields indicating RIS identifiers, or some combination thereof to support indicating configurations for multiple RISs 205. The fields may include bit values indicating absolute values (e.g., absolute positions, absolute uplink reflection angles, absolute downlink reflection angles), relative values (e.g., relative positions, relative uplink reflection angles, relative downlink reflection angles), or some combination thereof. In some aspects, UE 115-a may receive the RRC message directly from base station 105-a or via a RIS 205. Based on the RRC message, UE 115-a may select a RIS 205 from the one or more RISs 205 and utilize the selected RIS 205 to facilitate communications with the base station 105-a.

For example, UE 115-a may be communicating with base station 105-a directly via communication link 210-d and/or communicating with base station 105-a via RIS 205-a over communications link 210-a. However, UE 115-a and/or obstruction 215 may move such that communication link 210-d and/or communications link 210-a may no longer be appropriate for communicating with base station 105-a. For example, the communication link 210 may be blocked such as in the case of communication link 210-d and/or one or more parameters associated with the RIS 205 (e.g., RIS 205-a) and/or communication link 210 (e.g., communication link 210-a) may change in a way that it is no longer reliable and/or efficient to communicate with base station 105-a via communication link 210-d and/or communication link 210-a via RIS 205-a.

As such, UE 115-a may determine to perform a handover procedure (e.g., from base station 105-a, and/or from RIS 205-a) to another RIS 205 to support communications with base station 105-a. For example, UE 115-a may identify one or more RIS configuration parameters such as a reflection angle 220 (e.g., an uplink reflection angle, a downlink reflection angle, or a reflection angle associated with the uplink and downlink) associated with each RIS 205 based on the location of UE 115-a, such as reflection angle 220-a associated with RIS 205-a, reflection angle 220-b associated with RIS 205-b, and reflection angle 220-c associated with RIS 205-c. Based on the location of UE 115-a, the location of base station 105-a, the location of each RIS 205, or the reflection angle 220 associated with each RIS 205, or a combination thereof, UE 115-a may select a RIS 205 to use for communicating with base station 105-a. For example, UE 115-a may determine that the using RIS 205-c may result in a signal transmitted by UE 115-a via communication link 210-c being directed to obstruction 215. Rather, UE 115-a may determine that using RIS 205-b may result in a signal transmitted by UE 115-a via communication link 210-b being directed to base station 105-a (e.g., avoiding the obstruction 215). As such, UE 115-a may select RIS 205-b to use for communicating (e.g., uplink communications, downlink communications) with base station 105-a.

In some cases, UE 115-a may indicate, to base station 105-a, the RIS 205 that UE 115-a selected. In some cases, base station 105-a may determine the RIS 205 that UE 115-a selected based on the signal received by base station 105-a. In some cases, a RIS 205 may add an indicator (e.g., a watermark, a signature) associated with the RIS 205 to a signal that comes in contact with the RIS 205. RIS 205-a, RIS 205-b, and RIS 205-c may each be configured with a different indicator. As such, UE 115-a may direct a signal to a RIS 205, such as RIS 205-b, and upon reaching RIS 205-b, RIS 205-b may add the indicator to the signal before reflecting the signal to base station 105-a. Upon reaching base station 105-a, base station 105-a may identify the indicator added to the signal to determine which RIS 205 UE 115-a used to communicate with base station 105-a. In some cases, base station 105-a may determine the RIS 205 that UE 115-a selected based on the channel associated with signal received by base station 105-a. Base station 105-a may determine the channel associated with the signal received via a RIS 205, and determine which RIS 205 UE 115-a used to communicate with base station 105-a based on the channel. Base station 105-a may identify which RIS 205 is being used by which UE 115 to determine a number of UEs 115 using a RIS 205 at a time.

In some aspects, UE 115-a may perform the handover procedure without input from the base station 105-a, or without first requesting to perform a handover procedure. For example, the base station 105-a may not be involved in the handover procedure. Such a handover procedure may be transparent to the base station 105-a. As such, UE 115-a may perform the transparent handover procedure to a RIS 205, such as RIS 205-b and UE 115-a may use RIS 205-b to communicate with base station 105-b. As such, base station 105-a may be unaware of which RIS 205 UE 115-a is using to communicate with base station 105-a until base station 105-a receives a signal from UE 115-a via the RIS 205 that UE 115-a selected.

In some implementations, multiple UEs 115 may determine to use the same RIS 205 to communicate with base station 105-a. However, if one or more of the UEs 115 using the same RIS 205 are configured with the same or similar time and frequency resources for communicating with base station 105-a, then base station 105-a may be unable (e.g., or may use a large amount of overhead) to distinguish between the signals from the multiple UEs 115 using the same RIS 205 due to a lack of spatial suppression between the signals. To support reliable and effieicnt RIS handover procedures, UE 115-a may receive an indication from base station 105-a (e.g., directly from base station 205-a, or via a RIS 205) related to RIS handover. In some cases, the indication may encourage or direct UE 115-a to use a different RIS 205 than the RIS being used by UE 115-a, or to not use one or more RISs 205 UE 115-a is neighboring, or to use a particular RIS 205.

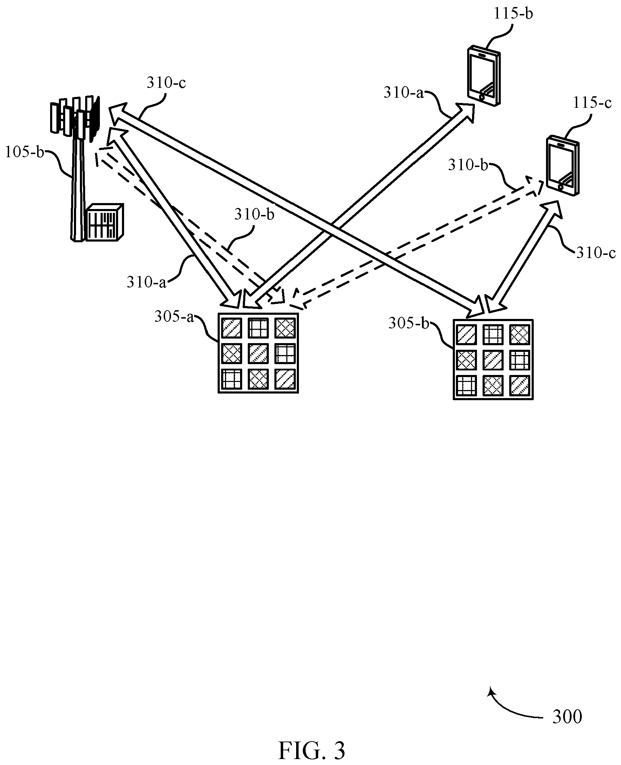

**FIG. 3** illustrates an example of a wireless communications system 300 that supports handover techniques associated with reconfigurable intelligent surfaces in accordance with aspects of the present disclosure. The wireless communications system 300 may include base station 105-b, UEs 115-b, and 115-c, and RISs 305-a, and 305-b, which may be examples of a base station 105, UEs 115, and RISs 155 as described with reference to FIG. 1. Base station 105-b may serve a geographic coverage area that may encompass UEs 115-b and 115-c, and RISs 305-a and 305-b. In some cases, base station 105-b may implement a RIS handover indication procedure with UE 115-b and/or UE 115-c that may allow UE 115-b and/or UE 115-c to efficiently perform a handover procedure to one or more RISs 305. Additionally or alternatively, other wireless devices, such as UE 115-b and/or UE 115-c, may implement a same or similar RIS handover indication procedure. In some examples, the wireless communications system 300 may support multiple radio access technologies including 4G systems such as LTE systems, LTE-A systems, or LTE-A Pro systems, and 5G systems which may be referred to as NR systems. The wireless communications system 300 may also support improvements to power consumption, spectral efficiency, higher data rates and, in some examples, may promote enhanced efficiency for higher reliability and lower latency wireless communications (e.g., uplink transmissions), among other benefits.

As described with reference to FIG. 2, to support reliable and efficient RIS handover procedures, a UE 115 may receive an indication from a base station 105 (e.g., directly from the base station 105, or via a RIS 305) related to RIS handover. Base station 105-b may determine a number of UEs 115 using one or more RISs 305 in the coverage area of base station 105-b and/or UE loading information for one or more RISs 305 in the coverage area of base station 105-b. For example, base station 105-b may determine a number of UEs 115 and/or UE loading information for each RIS in the coverage area of base station 105-b, or determine a number of UEs 115 and/or UE loading information for loading sensitive RISs 205 (e.g., RISs 205 that may reliably support one or a few UEs 115 at a time).

Based on determining the number of UEs 115 and/or UE loading information for the one or more RISs 305, base station 105-b may transmit an indication to one UE 115, or to multiple UEs 115, such as UE 115-b and/or UE 115-c, and may include RIS handover information associated with one RIS 305 or multiple RISs 305, such as RISs 305-a and 305-b. In some cases, the indication may include a degree of UE loading associated with each RIS 305 included in the indication. The degrees of UE loading may be indicated as relative levels, or indicated numerically, etc. For example, the indication may indicate an idle degree of UE loading (e.g., no UE loading information associated with the RIS 305, the RIS 305 is not serving any UEs 115), low degree of UE loading, a medium degree of UE loading, a high degree of UE loading, etc. The indication may implicitly or explicitly indicate the degree of UE loading. For example, an explicit indication may include a number of bits associated with indicating the degree of UE loading, where the number of bits may be based on the number of degrees of UE loading that are configured to distinguish between the degrees. For example, for four degrees of UE loading (e.g., idle, low, medium, high), the indication may include two bits, where the combination of bits in the 2-bit sequence may be used to distinguish between the degrees. For example, a 00 bit-sequence may indicate an idle degree, a 01 may indicate a low degree, a 10 may indicate a medium degree, and a 11 may indicate a high degree.

In an example of implicit indication, the indication may be encoded in a signal, such as a reference signal (e.g., demodulation reference signal (DMRS), CSI-RS, PDCCH). For example, a sequence of the reference signal may indicate a degree of UE loading. A first sequence may indicate an idle degree of UE loading, a second sequence may indicate a low degree of UE loading, a third sequence may indicate a medium degree of UE loading, a fourth sequence may indicate a high degree of UE loading, etc. The sequence to degree of UE loading mapping may be preconfigured and signaled to the UE 115 aperiodically, semi-persistently, or dynamically via RRC signaling, medium access control (MAC) control element (MAC-CE) signaling, and/or downlink control information (DCI) signaling. As such, a UE 115 may receive a reference signal from a base station 105 via a RIS 305. The UE may determine the sequence of the reference signal, where the sequence of the reference signal received via the RIS 305 is associated with the degree of UE loading of the RIS 305. As such, the UE may determine the degree of UE loading associated with the RIS 305 based on the sequence.

The degrees of UE loading, such as the number of UEs that constitutes a low degree of UE loading versus a high degree of UE loading may be configured aperiodically, semi-persistently, or dynamically, via RRC signaling, MAC-CE signaling, or DCI signaling. Any number of degrees of UE loading may be configured, and may be configured consistently for each RIS 305 associated with a base station 105, or the configuration may be RIS 305 specific. For example, a number of UEs 115 that results in a low level of UE loading may be different for RIS 305-a and RIS 305-b, or may be the same. In some cases, additionally or alternatively to indicating the degree of UE loading, the indication may include the number of UEs 115 using each RIS 305 (e.g., currently served by each RIS 305). The indication of the degree of UE loading and/or the indication of the number of UEs 115 using a RIS 305 may serve to encourage or direct one or more UEs 115 to switch to a different RIS 305, or to not use the RIS 305. As such, upon receiving the indication of the degree of UE loading and/or the number of UEs 115 using each RIS 305, a UE 115 may determine to not handover to a RIS 305 based on the RIS 305 serving a large number of UEs 115 and/or the UE, if currently served by the RIS 305, may determine to handover to a different RIS 305, such as a RIS 305 serving a lower number of UEs 115.

In some implementations, base station 105-b may determine one or more other parameters based on the number of UEs 115 using a RIS 305 and/or based on a degree of UE loading associated with a RIS 305. For example, base station 105-b may determine a penalty for one or more UEs 115 to apply when using the RIS 305. For example, if a RIS 305 is associated with a high degree of UE loading, base station 105-b may determine that each UE 115 using the RIS 305, or a subset of UEs 115 using the RIS 305, or any UE 115 that may handover to the RIS 305, should apply an RSRP penalty when using the RIS 305. As such, additionally or alternatively, to indicating the degree of UE loading and/or the number of UEs 115 served by a RIS 305, base station 105-b may configure the indication to include an indication of a penalty (e.g., RSRP penalty) associated with using one or more RISs 305. Therefore, if a UE 115 uses the RIS 305 that is associated with an RSRP penalty, upon receiving and measuring the RSRP of one or more reference signals from the base station via the RIS 305, the UE 115 may apply the RSRP penalty to the RSRP measurement. In some cases, the UE 115 may determine to not use a RIS 305, such as a RIS 305 not currently serving the UE 115, or to stop using a RIS 305, such as a RIS 305 currently serving the UE 115 based on the RSRP penalty. For example, if the RSRP penalty associated with using a RIS 305 is large, the UE 115 may determine to not handover to that RIS 305 or to use a different RIS 305, if currently being served by the RIS 305 associated with the large RSRP penalty. In another example, if the RSRP measurement plus the RSRP penalty is below a threshold the UE 115 may be configured to handover to a different RIS 305, and if the RSRP measurement plus the RSRP penalty is above a threshold, the UE 115 may determine to remain on the RIS 305.

In another example, base station 105-b may determine an offset associated with using a RIS 305, such as an EPRE offset (e.g., *P_{c}*). EPRE may indicate PDSCH power and an EPRE offset may indicate a PDSCH EPRE to CSI-RS EPRE. The EPRE offset may be based on the number of UEs 115 using a RIS 305. For example, base station 105-b may determine an EPRE offset for one or more UEs 115 to apply when using a RIS 305. For example, if a RIS 305 is associated with a high degree of UE loading, base station 105-b may determine that each UE 115 using the RIS 305, or a subset of UEs 115 using the RIS 305, or any UE 115 that may handover to the RIS 305, should apply the EPRE offset when using the RIS 305. As such, additionally or alternatively, to indicating the degree of UE loading, the number of UEs 115 served by a RIS 305, and/or the RSRP penalty, base station 105-b may configure the indication to include an indication of EPRE offset associated with using one or more RISs 305. Therefore, if a UE 115 uses the RIS 305 that is associated with an EPRE offset, the UE 15 may apply the indicated EPRE offset when using the RIS 305. In some cases, the UE 115 may determine to not use a RIS 305, such as a RIS 305 not currently serving the UE 115, or to stop using a RIS 305, such as a RIS 305 currently serving the UE 115 based on the EPRE offset.

Base station 105-b may transmit the indication aperiodically, semi-persistently, or dynamically in RRC signaling, MAC-CE signaling, or DCI signaling as conditions change. Base station 105-b may configure the indication to be UE-specific, or group-specific, such that the base station 105 may transmit the same indication to a group of UEs 115.

In one example, UE 115-b may communicate with base station 105-b via RIS 305-a over communications link 310-a. Base station 105-b may determine that RIS 305-a is currently serving a large number of UEs 115 and/or is associated with a high degree of UE loading. In some cases, base station 105-b may determine an RSRP penalty and/or an EPRE offset associated with using RIS 305-a. Base station 105-b may transmit an indication to UE 115-b, currently being served by RIS 305-a, and/or to UE 115-c, a neighboring UE 115 not being served by RIS 305-a. The indication may include a degree of UE loading, the number of UEs 115 using RIS 305-a, an RSRP penalty, or an EPRE offset, or a combination thereof associated with RIS 305-a. If UE 115-b receives the indication, UE 115-b may determine whether to continue using RIS 305-a, or to perform a handover procedure to a different RIS 305 based on the indication. If UE 115-c receives the indication, UE 115-b may determine whether to perform a handover procedure to RIS 305-a based on the indication.

In another example, UE 115-b may communicate with base station 105-b via RIS 305-a over communications link 310-a and UE 115-c may communicate with base station 105-b via RIS 305-a over communications link 310-b. Base station 105-b may determine that RIS 305-a is currently serving a large number of UEs 115 and/or is associated with a high degree of UE loading. In some cases, base station 105-b may determine an RSRP penalty and/or an EPRE offset associated with using RIS 305-a. In some cases, base station 105-b may transmit the indication to each UE 115 using RIS 305-a, or to a subset of UEs 115 using RIS 305-a. For example, base station 105-b may transmit an indication to UE 115-b, and/or to UE 115-c. The indication may include a degree of UE loading, the number of UEs 115 using RIS 305-a, an RSRP penalty, or an EPRE offset, or a combination thereof associated with RIS 305-a. In some cases, base station 105-b may transmit, to UE 115-b and/or UE 115-c, a second indication related to RIS 305-b that may include a degree of UE loading, the number of UEs 115 using RIS 305-b, an RSRP penalty, or an EPRE offset, or a combination thereof associated with RIS 305-b. The indication associated with RIS 305-a and RIS 305-b may be included in the same message, or different messages. If UE 115-b receives either or both of the indications, UE 115-b may determine whether to continue using RIS 305-a, or to perform a handover procedure to a different RIS 305, such as RIS 305-b, based on either or both of the indications. If UE 115-c receives either or both of the indications, UE 115-c may determine whether to continue using RIS 305-a, or to perform a handover procedure to a different RIS 305, such as RIS 305-b, based on the indication. In some cases, UEs 115 may coordinate via sidelink communication links to determine which UEs 115 should stop using RIS 305-a and which UEs 115 may continue using RIS 305-a. For example, UE 115-b may determine to continue using RIS 305-a and UE 115-c may determine to perform a handover procedure to RIS 305-b to communicate with base station 105-b via communications link 310-c.

In some implementations, additionally or alternatively to the indication of UE loading information (e.g., degree of UE loading, number of UEs 15, RSRP penalty, EPRE offset), base station 105-b may transmit a request (e.g., command) for one or more UEs 115 to stop using a RIS 305. For example, if RIS 305-a currently serves at least UE 115-b and UE 115-c and if base station 105-b determines that RIS 305-a is serving a large number of UEs 115, then base station 105-a may transmit a request to each UE 115 being served by RIS 305-a, for each UE 115 to stop using RIS 305-a. Upon receiving the request, UE 115-b and UE 115-c may perform a handover procedure to another RIS 305, such as RIS 305-b. In another example, if RIS 305-a currently serves at least UE 115-b and UE 115-c and if base station 105-b determines that RIS 305-a is serving a large number of UEs 115, then base station 105-a may transmit a request to a subset of the UEs 115 being served by RIS 305-a, such as UE 115-c. Upon receiving the request, UE 115-c may perform a handover procedure to another RIS 305, such as RIS 305-b while UE 115-b may continue using RIS 305-a.

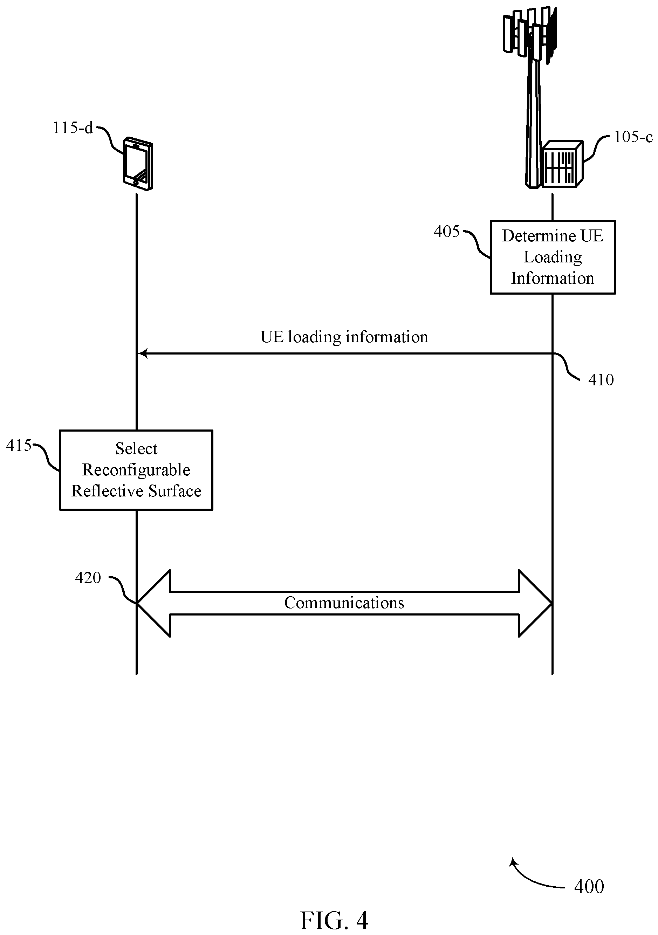

**FIG. 4** illustrates an example of a process flow 400 that supports handover techniques associated with reconfigurable intelligent surfaces in accordance with aspects of the present disclosure. The process flow 400 may illustrate an example RIS selection scheme. For example, UE 115-d may select a RIS to support communications with base station 105-c based on an indication from base station 105-c. Base station 105-c and UE 115-d may be examples of the corresponding wireless devices described with reference to FIGs. 1 through 3. In some cases, instead of UE 115-d implementing the RIS selection scheme, a different type of device (e.g., a base station 105) may perform a same or similar RIS selection scheme. Alternative examples of the following may be implemented, where some steps are performed in a different order than described or are not performed at all. In some cases, steps may include additional features not mentioned below, or further steps may be added.

At 405, base station 105-c may determine UE loading information. For example, base station 105-c may determine a degree of UE loading for at least one of a set of RISs (e.g., reconfigurable reflective surfaces) that are configured to assist in communications between the UE and the base station. Determining the UE loading information may be based on one or more reference signals, or other uplink reference signals received by base station 105-c from one or more UEs 115 via a RIS.

At 410, UE 115-d may receive, from base station 105-c, an indication of a degree of UE loading for at least one of a set of RISs that are configured to assist in communications between UE 115-d and base station 105-c. In some cases, receiving the indication may include UE 115-d receiving a message including the indication of the degree of UE loading, the message being a DCI message, an RRC message, or a MAC-CE message. In some cases, receiving the indication may include UE 115-d receiving a RIS identifier associated with each degree of UE loading for the at least one of the set of RISs included in the indication.

In some cases, receiving the indication may include UE 115-d receiving a quantity of bits, a combination of the quantity of bits indicating the degree of UE loading. For example, a first combination may indicate an idle degree of UE loading, a second combination may indicate a low degree of UE loading which is greater than the idle degree of UE loading, a third combination may indicate a medium degree of UE loading which is greater than the low degree of UE loading, and a fourth combination may indicate a high degree of UE loading which is greater than the medium degree of UE loading.

In some implementations, receiving the indication may include UE 115-d receiving a value indicating a number of UEs 115 using each RIS of the at least one of the set of RISs. The value may indicate the degree of UE loading. In some implementations, receiving the indication may include UE 115-d receiving a value for modifying, by UE 115-d, an RSRP measurement associated with the at least one of the set of RISs, where the value may be based on the degree of UE loading of the at least one of the set of RISs. In some implementations, receiving the indication may include UE 115-d receiving an EPRE offset associated with using the at least one or the set of RISs, where a value of the EPRE offset may be based on the degree of UE loading of the at least one of the set of RISs.

In some cases, UE 115-d may receive, from base station 105-c, a reference signal including a sequence, where the sequence may convey the indication of the degree of UE loading. For example, a first sequence may indicate an idle degree of UE loading, a second sequence may indicate a low degree of UE loading, a third sequence may indicate a medium degree of UE loading, and a fourth sequence may indicate a high degree of UE loading. The reference signal may be a DMRS or may be included in a downlink control channel (e.g., PDCCH).

In some cases, UE 115-d may transmit a reference signal (e.g., uplink reference signal) to the RIS, where receiving the indication of the degree of UE loading may be based on transmitting the reference signal.

At 415, UE 115-d may select a RIS of the set of RISs for use in the communications between UE 115-d and base station 105-c based on the degree of UE loading of the selected RIS.

In some implementations, UE 115-d may identify a degree of UE loading less than a high degree of UE loading from the indication, and identify the RIS associated with the degree of UE loading that is less than the high degree of UE loading. Selecting the RIS may be based on the selected RIS having the degree of UE loading that is less than the high degree of UE loading.

At 420, UE 115-d and base station 105-c may communicate (e.g., uplink communications, downlink communications). For example, UE 115-d may transmit a signal to base station 105-c via the selected RIS.

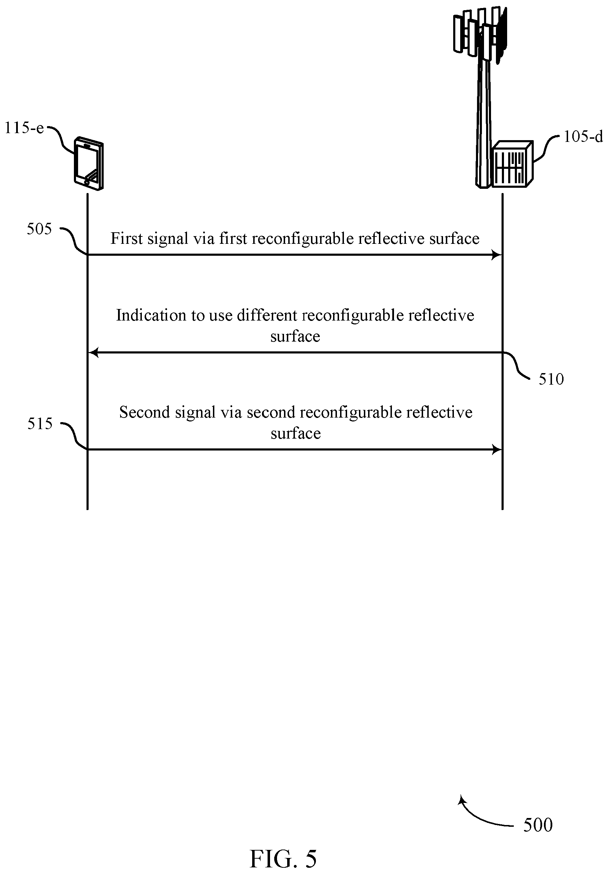

**FIG. 5** illustrates an example of a process flow 500 that supports handover techniques associated with reconfigurable intelligent surfaces in accordance with aspects of the present disclosure. The process flow 500 may illustrate an example RIS usage scheme. For example, UE 115-e may use a RIS to support communications with base station 105-d based on an indication form base station 105-d. Base station 105-d and UE 115-e may be examples of the corresponding wireless devices described with reference to FIGs. 1 through 4. The RIS selection scheme described with reference to FIG. 4 may be used in combination with the RIS scheme described with reference to FIG. 5. In some cases, instead of UE 115-e implementing the RIS usage scheme, a different type of device (e.g., a base station 105) may perform a same or similar RIS usage scheme. Alternative examples of the following may be implemented, where some steps are performed in a different order than described or are not performed at all. In some cases, steps may include additional features not mentioned below, or further steps may be added.

At 505, UE 115-e may transmit a first signal (e.g., a control signal, a data signal, a reference signal) to base station 105-d via a first RIS.

In some implementations, base station 105-d may determine a degree of UE loading associated with the first RIS, where transmitting the indication is based on the degree of UE loading associated with the first RIS. Determining the degree of UE loading may be based on the first signal and/or based on one or more other signals transmitted from multiple UEs 115.

At 510, UE 115-e may receive, from base station 105-d, an indication for UE 115-e to use a different RIS than the first RIS. In some cases, UE 115-e may receive a message including an indication of one or more RISs for UE 115-e to switch to, where each of the one or more RISs may be different than the first RIS.

At 515, UE 115-e may transmit a second signal (e.g., a control signal, a data signal, a reference signal) to base station 105-d via a second RIS based on the indication, where the second RIS is different than the first RIS.

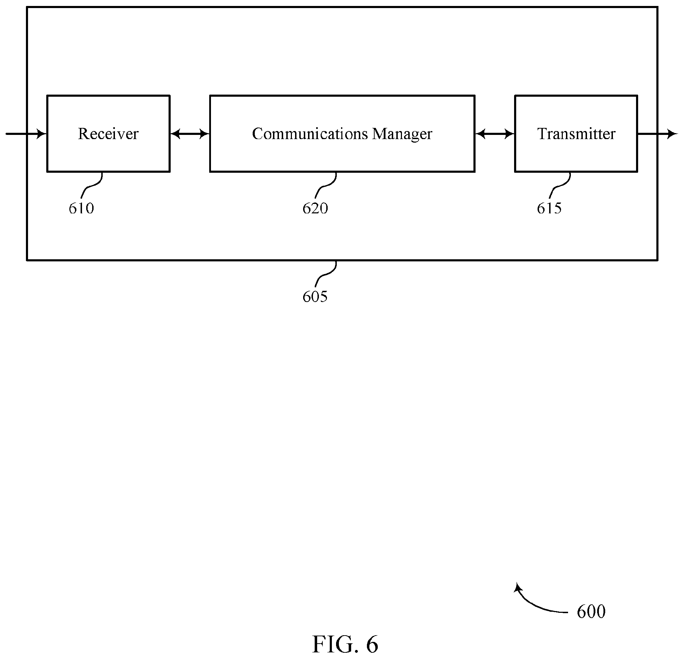

**FIG. 6** shows a block diagram 600 of a device 605 that supports handover techniques associated with reconfigurable intelligent surfaces in accordance with aspects of the present disclosure. The device 605 may be an example of aspects of a UE 115 as described herein. The device 605 may include a receiver 610, a transmitter 615, and a communications manager 620. The device 605 may also include a processor. Each of these components may be in communication with one another (e.g., via one or more buses).

The receiver 610 may provide a means for receiving information such as packets, user data, control information, or any combination thereof associated with various information channels (e.g., control channels, data channels, information channels related to handover techniques associated with reconfigurable intelligent surfaces). Information may be passed on to other components of the device 605. The receiver 610 may utilize a single antenna or a set of multiple antennas.

The transmitter 615 may provide a means for transmitting signals generated by other components of the device 605. For example, the transmitter 615 may transmit information such as packets, user data, control information, or any combination thereof associated with various information channels (e.g., control channels, data channels, information channels related to handover techniques associated with reconfigurable intelligent surfaces). In some examples, the transmitter 615 may be co-located with a receiver 610 in a transceiver module. The transmitter 615 may utilize a single antenna or a set of multiple antennas.

The communications manager 620, the receiver 610, the transmitter 615, or various combinations thereof or various components thereof may be examples of means for performing various aspects of handover techniques associated with reconfigurable intelligent surfaces as described herein. For example, the communications manager 620, the receiver 610, the transmitter 615, or various combinations or components thereof may support a method for performing one or more of the functions described herein.

In some examples, the communications manager 620, the receiver 610, the transmitter 615, or various combinations or components thereof may be implemented in hardware (e.g., in communications management circuitry). The hardware may include a processor, a digital signal processor (DSP), an application-specific integrated circuit (ASIC), a field-programmable gate array (FPGA) or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 620, the receiver 610, the transmitter 615, or various combinations or components thereof may be implemented in code (e.g., as communications management software or firmware) executed by a processor. If implemented in code executed by a processor, the functions of the communications manager 620, the receiver 610, the transmitter 615, or various combinations or components thereof may be performed by a general-purpose processor, a DSP, a central processing unit (CPU), an ASIC, an FPGA, or any combination of these or other programmable logic devices (e.g., configured as or otherwise supporting a means for performing the functions described in the present disclosure).

In some examples, the communications manager 620 may be configured to perform various operations (e.g., receiving, monitoring, transmitting) using or otherwise in cooperation with the receiver 610, the transmitter 615, or both. For example, the communications manager 620 may receive information from the receiver 610, send information to the transmitter 615, or be integrated in combination with the receiver 610, the transmitter 615, or both to receive information, transmit information, or perform various other operations as described herein.

The communications manager 620 may support wireless communications at a UE in accordance with examples as disclosed herein. For example, the communications manager 620 may be configured as or otherwise support a means for receiving, from a base station, an indication of a degree of UE loading for at least one of a set of multiple reconfigurable reflective surfaces that are configured to assist in communications between the UE and the base station. The communications manager 620 may be configured as or otherwise support a means for determining a reconfigurable reflective surface of the set of multiple reconfigurable reflective surfaces for use in the communications between the UE and the base station based on the degree of UE loading of the determined reconfigurable reflective surface. The communications manager 620 may be configured as or otherwise support a means for transmitting a signal to the base station via the determined reconfigurable reflective surface.

Additionally or alternatively, the communications manager 620 may support wireless communications at a UE in accordance with examples as disclosed herein. For example, the communications manager 620 may be configured as or otherwise support a means for transmitting a first signal to a base station via a first reconfigurable reflective surface. The communications manager 620 may be configured as or otherwise support a means for receiving, from the base station, an indication for the UE to use a different reconfigurable reflective surface than the first reconfigurable reflective surface. The communications manager 620 may be configured as or otherwise support a means for transmitting a second signal to the base station via a second reconfigurable reflective surface based on the indication.

By including or configuring the communications manager 620 in accordance with examples as described herein, the device 605 (e.g., a processor controlling or otherwise coupled to the receiver 610, the transmitter 615, the communications manager 620, or a combination thereof) may support techniques for more efficient utilization of communication resources.

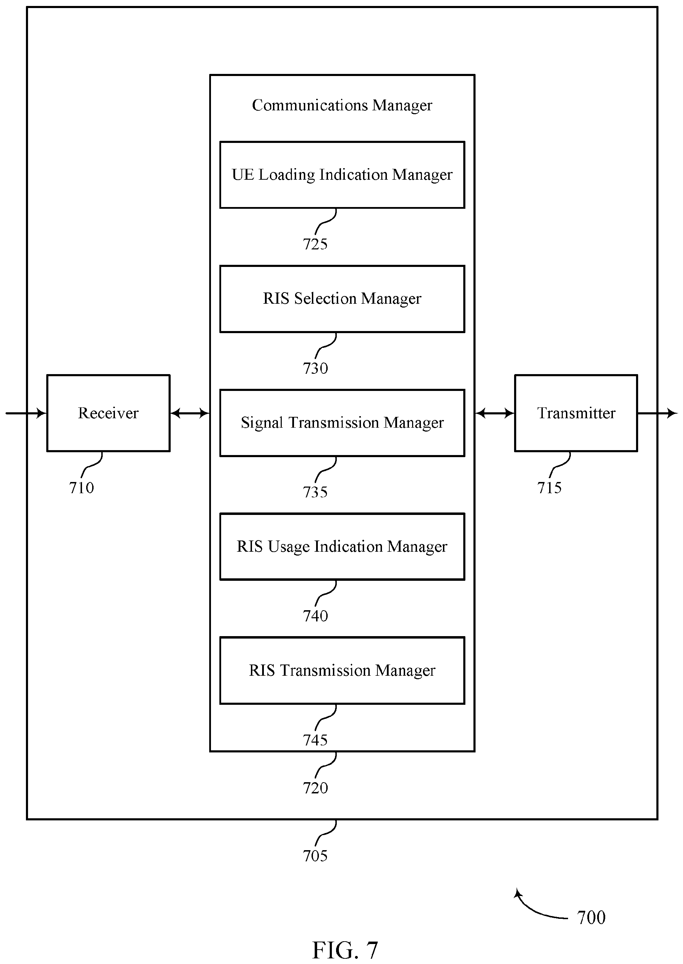

**FIG. 7** shows a block diagram 700 of a device 705 that supports handover techniques associated with reconfigurable intelligent surfaces in accordance with aspects of the present disclosure. The device 705 may be an example of aspects of a device 605 or a UE 115 as described herein. The device 705 may include a receiver 710, a transmitter 715, and a communications manager 720. The device 705 may also include a processor. Each of these components may be in communication with one another (e.g., via one or more buses).

The receiver 710 may provide a means for receiving information such as packets, user data, control information, or any combination thereof associated with various information channels (e.g., control channels, data channels, information channels related to handover techniques associated with reconfigurable intelligent surfaces). Information may be passed on to other components of the device 705. The receiver 710 may utilize a single antenna or a set of multiple antennas.

The transmitter 715 may provide a means for transmitting signals generated by other components of the device 705. For example, the transmitter 715 may transmit information such as packets, user data, control information, or any combination thereof associated with various information channels (e.g., control channels, data channels, information channels related to handover techniques associated with reconfigurable intelligent surfaces). In some examples, the transmitter 715 may be co-located with a receiver 710 in a transceiver module. The transmitter 715 may utilize a single antenna or a set of multiple antennas.

The device 705, or various components thereof, may be an example of means for performing various aspects of handover techniques associated with reconfigurable intelligent surfaces as described herein. For example, the communications manager 720 may include a UE loading indication manager 725, a RIS selection manager 730, a signal transmission manager 735, a RIS usage indication manager 740, a RIS transmission manager 745, or any combination thereof. The communications manager 720 may be an example of aspects of a communications manager 620 as described herein. In some examples, the communications manager 720, or various components thereof, may be configured to perform various operations (e.g., receiving, monitoring, transmitting) using or otherwise in cooperation with the receiver 710, the transmitter 715, or both. For example, the communications manager 720 may receive information from the receiver 710, send information to the transmitter 715, or be integrated in combination with the receiver 710, the transmitter 715, or both to receive information, transmit information, or perform various other operations as described herein.

The communications manager 720 may support wireless communications at a UE in accordance with examples as disclosed herein. The UE loading indication manager 725 may be configured as or otherwise support a means for receiving, from a base station, an indication of a degree of UE loading for at least one of a set of multiple reconfigurable reflective surfaces that are configured to assist in communications between the UE and the base station. The RIS selection manager 730 may be configured as or otherwise support a means for determining a reconfigurable reflective surface of the set of multiple reconfigurable reflective surfaces for use in the communications between the UE and the base station based on the degree of UE loading of the determined reconfigurable reflective surface. The signal transmission manager 735 may be configured as or otherwise support a means for transmitting a signal to the base station via the determined reconfigurable reflective surface.

Additionally or alternatively, the communications manager 720 may support wireless communications at a UE in accordance with examples as disclosed herein. The signal transmission manager 735 may be configured as or otherwise support a means for transmitting a first signal to a base station via a first reconfigurable reflective surface. The RIS usage indication manager 740 may be configured as or otherwise support a means for receiving, from the base station, an indication for the UE to use a different reconfigurable reflective surface than the first reconfigurable reflective surface. The RIS transmission manager 745 may be configured as or otherwise support a means for transmitting a second signal to the base station via a second reconfigurable reflective surface based on the indication.

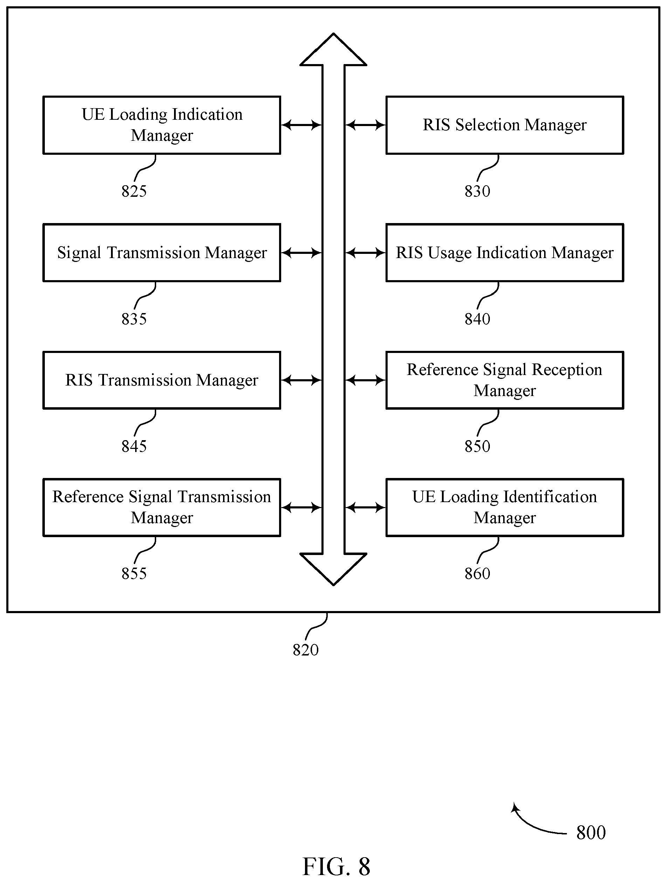

**FIG.** 8 shows a block diagram 800 of a communications manager 820 that supports handover techniques associated with reconfigurable intelligent surfaces in accordance with aspects of the present disclosure. The communications manager 820 may be an example of aspects of a communications manager 620, a communications manager 720, or both, as described herein. The communications manager 820, or various components thereof, may be an example of means for performing various aspects of handover techniques associated with reconfigurable intelligent surfaces as described herein. For example, the communications manager 820 may include a UE loading indication manager 825, a RIS selection manager 830, a signal transmission manager 835, a RIS usage indication manager 840, a RIS transmission manager 845, a reference signal reception manager 850, a reference signal transmission manager 855, a UE loading identification manager 860, or any combination thereof. Each of these components may communicate, directly or indirectly, with one another (e.g., via one or more buses).

The communications manager 820 may support wireless communications at a UE in accordance with examples as disclosed herein. The UE loading indication manager 825 may be configured as or otherwise support a means for receiving, from a base station, an indication of a degree of UE loading for at least one of a set of multiple reconfigurable reflective surfaces that are configured to assist in communications between the UE and the base station. The RIS selection manager 830 may be configured as or otherwise support a means for determining a reconfigurable reflective surface of the set of multiple reconfigurable reflective surfaces for use in the communications between the UE and the base station based on the degree of UE loading of the determined reconfigurable reflective surface. The signal transmission manager 835 may be configured as or otherwise support a means for transmitting a signal to the base station via the determined reconfigurable reflective surface.

In some examples, the UE loading indication manager 825 may be configured as or otherwise support a means for receiving a quantity of bits, a combination of the quantity of bits indicating the degree of UE loading.

In some examples, a first combination indicates an idle degree of UE loading, a second combination indicates a low degree of UE loading which is greater than the idle degree of UE loading, a third combination indicates a medium degree of UE loading which is greater than the low degree of UE loading, and a fourth combination indicates a high degree of UE loading which is greater than the medium degree of UE loading.

In some examples, the UE loading indication manager 825 may be configured as or otherwise support a means for receiving a value indicating a number of UEs using each reconfigurable reflective surface of the at least one of the set of multiple reconfigurable reflective surfaces, the value indicating the degree of UE loading.

In some examples, to support receiving the indication of the degree of UE loading, the UE loading indication manager 825 may be configured as or otherwise support a means for receiving a value for modifying, by the UE, a RSRP measurement associated with the at least one of the set of multiple reconfigurable reflective surfaces, the value based on the degree of UE loading of the at least one of the set of multiple reconfigurable reflective surfaces.

In some examples, to support receiving the indication of the degree of UE loading, the UE loading indication manager 825 may be configured as or otherwise support a means for receiving an EPRE offset associated with using the at least one or the set of multiple reconfigurable reflective surfaces, a value of the EPRE offset based on the degree of UE loading of the at least one of the set of multiple reconfigurable reflective surfaces.

In some examples, the reference signal reception manager 850 may be configured as or otherwise support a means for receiving, from the base station, a reference signal include a sequence, where the sequence conveys the indication of the degree of UE loading.

In some examples, the reference signal is a demodulation reference signal or is included in a downlink control channel.

In some examples, a first sequence indicates an idle degree of UE loading, a second sequence indicates a low degree of UE loading, a third sequence indicates a medium degree of UE loading, and a fourth sequence indicates a high degree of UE loading.

In some examples, the reference signal transmission manager 855 may be configured as or otherwise support a means for transmitting a reference signal to the reconfigurable reflective surface, where receiving the indication of the degree of UE loading is based on transmitting the reference signal.

In some examples, to support receiving the indication of the degree of UE loading, the UE loading indication manager 825 may be configured as or otherwise support a means for receiving a message including the indication of the degree of UE loading, the message being a DCI message, an RRC message, or a MAC-CE message.

In some examples, to support determining the reconfigurable reflective surface, the UE loading identification manager 860 may be configured as or otherwise support a means for identifying a degree of UE loading less than a high degree of UE loading from the indication. In some examples, to support determining the reconfigurable reflective surface, the RIS selection manager 830 may be configured as or otherwise support a means for identifying the reconfigurable reflective surface associated with the degree of UE loading that is less than the high degree of UE loading, where identifying the reconfigurable reflective surface is based on the determined reconfigurable reflective surface having the degree of UE loading that is less than the high degree of UE loading.

In some examples, to support receiving the indication of the degree of UE loading, the UE loading indication manager 825 may be configured as or otherwise support a means for receiving a reconfigurable reflective surface identifier associated with each degree of UE loading for the at least one of the set of multiple reconfigurable reflective surfaces included in the indication.

Additionally or alternatively, the communications manager 820 may support wireless communications at a UE in accordance with examples as disclosed herein. In some examples, the signal transmission manager 835 may be configured as or otherwise support a means for transmitting a first signal to a base station via a first reconfigurable reflective surface. The RIS usage indication manager 840 may be configured as or otherwise support a means for receiving, from the base station, an indication for the UE to use a different reconfigurable reflective surface than the first reconfigurable reflective surface. The RIS transmission manager 845 may be configured as or otherwise support a means for transmitting a second signal to the base station via a second reconfigurable reflective surface based on the indication.

In some examples, to support receiving the indication, the RIS usage indication manager 840 may be configured as or otherwise support a means for receiving a message including an indication of one or more reconfigurable reflective surfaces for the UE to switch to, each of the one or more reconfigurable reflective surfaces different than the first reconfigurable reflective surface.

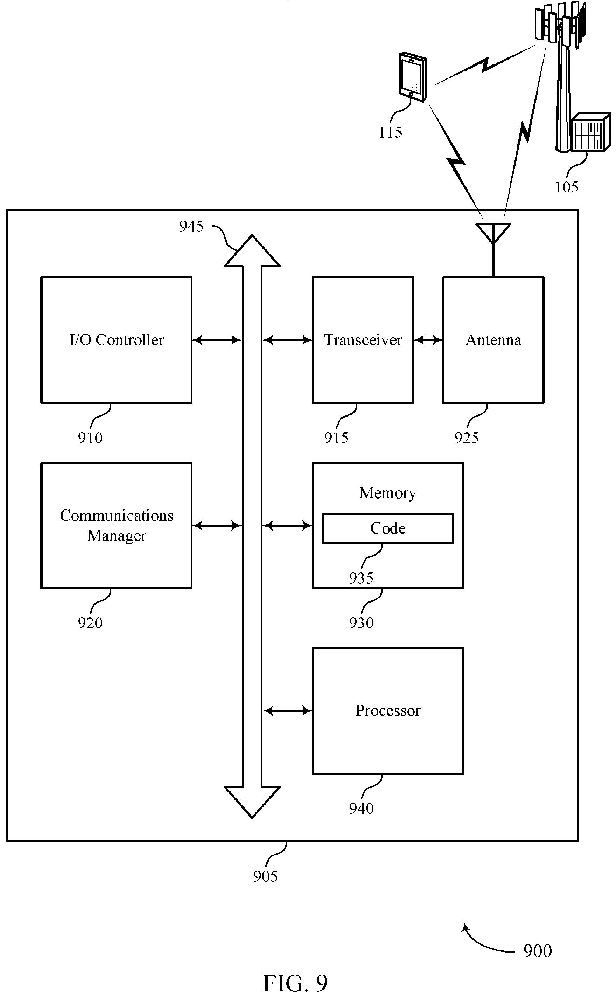

**FIG. 9** shows a diagram of a system 900 including a device 905 that supports handover techniques associated with reconfigurable intelligent surfaces in accordance with aspects of the present disclosure. The device 905 may be an example of or include the components of a device 605, a device 705, or a UE 115 as described herein. The device 905 may communicate wirelessly with one or more base stations 105, UEs 115, or any combination thereof. The device 905 may include components for bi-directional voice and data communications including components for transmitting and receiving communications, such as a communications manager 920, an input/output (I/O) controller 910, a transceiver 915, an antenna 925, a memory 930, code 935, and a processor 940. These components may be in electronic communication or otherwise coupled (e.g., operatively, communicatively, functionally, electronically, electrically) via one or more buses (e.g., a bus 945).

The I/O controller 910 may manage input and output signals for the device 905. The I/O controller 910 may also manage peripherals not integrated into the device 905. In some cases, the I/O controller 910 may represent a physical connection or port to an external peripheral. In some cases, the I/O controller 910 may utilize an operating system such as iOS^{®}, ANDROID^{®}, MS-DOS^{®}, MS-WINDOWS^{®}, OS/2^{®}, UNIX^{®}, LINUX^{®}, or another known operating system. Additionally or alternatively, the I/O controller 910 may represent or interact with a modem, a keyboard, a mouse, a touchscreen, or a similar device. In some cases, the I/O controller 910 may be implemented as part of a processor, such as the processor 940. In some cases, a user may interact with the device 905 via the I/O controller 910 or via hardware components controlled by the I/O controller 910.

In some cases, the device 905 may include a single antenna 925. However, in some other cases, the device 905 may have more than one antenna 925, which may be capable of concurrently transmitting or receiving multiple wireless transmissions. The transceiver 915 may communicate bi-directionally, via the one or more antennas 925, wired, or wireless links as described herein. For example, the transceiver 915 may represent a wireless transceiver and may communicate bi-directionally with another wireless transceiver. The transceiver 915 may also include a modem to modulate the packets, to provide the modulated packets to one or more antennas 925 for transmission, and to demodulate packets received from the one or more antennas 925. The transceiver 915, or the transceiver 915 and one or more antennas 925, may be an example of a transmitter 615, a transmitter 715, a receiver 610, a receiver 710, or any combination thereof or component thereof, as described herein.

The memory 930 may include random access memory (RAM) and read-only memory (ROM). The memory 930 may store computer-readable, computer-executable code 935 including instructions that, when executed by the processor 940, cause the device 905 to perform various functions described herein. The code 935 may be stored in a non-transitory computer-readable medium such as system memory or another type of memory. In some cases, the code 935 may not be directly executable by the processor 940 but may cause a computer (e.g., when compiled and executed) to perform functions described herein. In some cases, the memory 930 may contain, among other things, a basic I/O system (BIOS) which may control basic hardware or software operation such as the interaction with peripheral components or devices.

The processor 940 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In some other cases, a memory controller may be integrated into the processor 940. The processor 940 may be configured to execute computer-readable instructions stored in a memory (e.g., the memory 930) to cause the device 905 to perform various functions (e.g., functions or tasks supporting handover techniques associated with reconfigurable intelligent surfaces). For example, the device 905 or a component of the device 905 may include a processor 940 and memory 930 coupled to the processor 940, the processor 940 and memory 930 configured to perform various functions described herein.

The communications manager 920 may support wireless communications at a UE in accordance with examples as disclosed herein. For example, the communications manager 920 may be configured as or otherwise support a means for receiving, from a base station, an indication of a degree of UE loading for at least one of a set of multiple reconfigurable reflective surfaces that are configured to assist in communications between the UE and the base station. The communications manager 920 may be configured as or otherwise support a means for determining a reconfigurable reflective surface of the set of multiple reconfigurable reflective surfaces for use in the communications between the UE and the base station based on the degree of UE loading of the determined reconfigurable reflective surface. The communications manager 920 may be configured as or otherwise support a means for transmitting a signal to the base station via the determined reconfigurable reflective surface.

Additionally or alternatively, the communications manager 920 may support wireless communications at a UE in accordance with examples as disclosed herein. For example, the communications manager 920 may be configured as or otherwise support a means for transmitting a first signal to a base station via a first reconfigurable reflective surface. The communications manager 920 may be configured as or otherwise support a means for receiving, from the base station, an indication for the UE to use a different reconfigurable reflective surface than the first reconfigurable reflective surface. The communications manager 920 may be configured as or otherwise support a means for transmitting a second signal to the base station via a second reconfigurable reflective surface based on the indication.

By including or configuring the communications manager 920 in accordance with examples as described herein, the device 905 may support techniques for improved communication reliability, reduced latency, more efficient utilization of communication resources, and improved coordination between devices.

In some examples, the communications manager 920 may be configured to perform various operations (e.g., receiving, monitoring, transmitting) using or otherwise in cooperation with the transceiver 915, the one or more antennas 925, or any combination thereof. Although the communications manager 920 is illustrated as a separate component, in some examples, one or more functions described with reference to the communications manager 920 may be supported by or performed by the processor 940, the memory 930, the code 935, or any combination thereof. For example, the code 935 may include instructions executable by the processor 940 to cause the device 905 to perform various aspects of handover techniques associated with reconfigurable intelligent surfaces as described herein, or the processor 940 and the memory 930 may be otherwise configured to perform or support such operations.

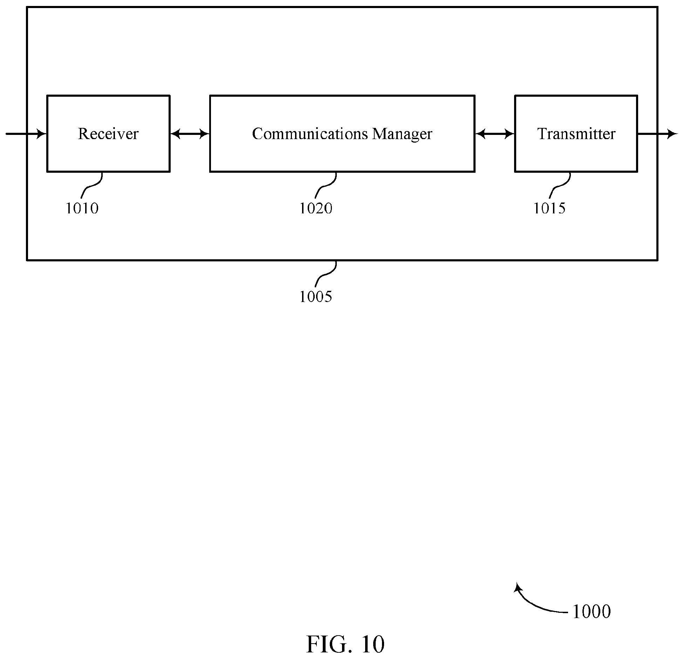

**FIG. 10** shows a block diagram 1000 of a device 1005 that supports handover techniques associated with reconfigurable intelligent surfaces in accordance with aspects of the present disclosure. The device 1005 may be an example of aspects of a base station 105 as described herein. The device 1005 may include a receiver 1010, a transmitter 1015, and a communications manager 1020. The device 1005 may also include a processor. Each of these components may be in communication with one another (e.g., via one or more buses).

The receiver 1010 may provide a means for receiving information such as packets, user data, control information, or any combination thereof associated with various information channels (e.g., control channels, data channels, information channels related to handover techniques associated with reconfigurable intelligent surfaces). Information may be passed on to other components of the device 1005. The receiver 1010 may utilize a single antenna or a set of multiple antennas.

The transmitter 1015 may provide a means for transmitting signals generated by other components of the device 1005. For example, the transmitter 1015 may transmit information such as packets, user data, control information, or any combination thereof associated with various information channels (e.g., control channels, data channels, information channels related to handover techniques associated with reconfigurable intelligent surfaces). In some examples, the transmitter 1015 may be co-located with a receiver 1010 in a transceiver module. The transmitter 1015 may utilize a single antenna or a set of multiple antennas.

The communications manager 1020, the receiver 1010, the transmitter 1015, or various combinations thereof or various components thereof may be examples of means for performing various aspects of handover techniques associated with reconfigurable intelligent surfaces as described herein. For example, the communications manager 1020, the receiver 1010, the transmitter 1015, or various combinations or components thereof may support a method for performing one or more of the functions described herein.

In some examples, the communications manager 1020, the receiver 1010, the transmitter 1015, or various combinations or components thereof may be implemented in hardware (e.g., in communications management circuitry). The hardware may include a processor, a DSP, an ASIC, an FPGA or other programmable logic device, a discrete gate or transistor logic, discrete hardware components, or any combination thereof configured as or otherwise supporting a means for performing the functions described in the present disclosure. In some examples, a processor and memory coupled with the processor may be configured to perform one or more of the functions described herein (e.g., by executing, by the processor, instructions stored in the memory).

Additionally or alternatively, in some examples, the communications manager 1020, the receiver 1010, the transmitter 1015, or various combinations or components thereof may be implemented in code (e.g., as communications management software or firmware) executed by a processor. If implemented in code executed by a processor, the functions of the communications manager 1020, the receiver 1010, the transmitter 1015, or various combinations or components thereof may be performed by a general-purpose processor, a DSP, a CPU, an ASIC, an FPGA, or any combination of these or other programmable logic devices (e.g., configured as or otherwise supporting a means for performing the functions described in the present disclosure).

In some examples, the communications manager 1020 may be configured to perform various operations (e.g., receiving, monitoring, transmitting) using or otherwise in cooperation with the receiver 1010, the transmitter 1015, or both. For example, the communications manager 1020 may receive information from the receiver 1010, send information to the transmitter 1015, or be integrated in combination with the receiver 1010, the transmitter 1015, or both to receive information, transmit information, or perform various other operations as described herein.

The communications manager 1020 may support wireless communications at a base station in accordance with examples as disclosed herein. For example, the communications manager 1020 may be configured as or otherwise support a means for determining a degree of UE loading for at least one of a set of multiple reconfigurable reflective surfaces that are configured to assist in communications between the UE and the base station. The communications manager 1020 may be configured as or otherwise support a means for transmitting, to a UE, an indication of the degree of UE loading for the at least one of the set of multiple reconfigurable reflective surfaces. The communications manager 1020 may be configured as or otherwise support a means for receiving a signal from the UE via a reconfigurable reflective surface from the set of multiple reconfigurable reflective surfaces.

Additionally or alternatively, the communications manager 1020 may support wireless communications at a base station in accordance with examples as disclosed herein. For example, the communications manager 1020 may be configured as or otherwise support a means for receiving a first signal from a UE via a first reconfigurable reflective surface. The communications manager 1020 may be configured as or otherwise support a means for transmitting, to the UE, an indication for the UE to use a different reconfigurable reflective surface than the first reconfigurable reflective surface. The communications manager 1020 may be configured as or otherwise support a means for receiving a second signal from the UE via a second reconfigurable reflective surface based on the indication.

By including or configuring the communications manager 1020 in accordance with examples as described herein, the device 1005 (e.g., a processor controlling or otherwise coupled to the receiver 1010, the transmitter 1015, the communications manager 1020, or a combination thereof) may support techniques for more efficient utilization of communication resources.

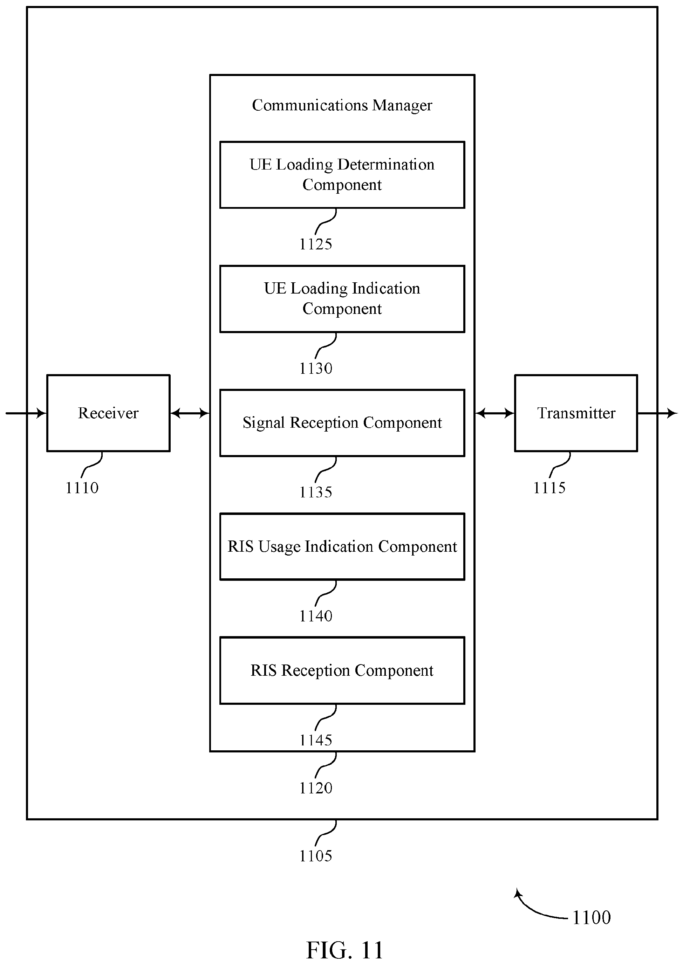

**FIG. 11** shows a block diagram 1100 of a device 1105 that supports handover techniques associated with reconfigurable intelligent surfaces in accordance with aspects of the present disclosure. The device 1105 may be an example of aspects of a device 1005 or a base station 105 as described herein. The device 1105 may include a receiver 1110, a transmitter 1115, and a communications manager 1120. The device 1105 may also include a processor. Each of these components may be in communication with one another (e.g., via one or more buses).

The receiver 1110 may provide a means for receiving information such as packets, user data, control information, or any combination thereof associated with various information channels (e.g., control channels, data channels, information channels related to handover techniques associated with reconfigurable intelligent surfaces). Information may be passed on to other components of the device 1105. The receiver 1110 may utilize a single antenna or a set of multiple antennas.

The transmitter 1115 may provide a means for transmitting signals generated by other components of the device 1105. For example, the transmitter 1115 may transmit information such as packets, user data, control information, or any combination thereof associated with various information channels (e.g., control channels, data channels, information channels related to handover techniques associated with reconfigurable intelligent surfaces). In some examples, the transmitter 1115 may be co-located with a receiver 1110 in a transceiver module. The transmitter 1115 may utilize a single antenna or a set of multiple antennas.

The device 1105, or various components thereof, may be an example of means for performing various aspects of handover techniques associated with reconfigurable intelligent surfaces as described herein. For example, the communications manager 1120 may include a UE loading determination component 1125, a UE loading indication component 1130, a signal reception component 1135, a RIS usage indication component 1140, a RIS reception component 1145, or any combination thereof. The communications manager 1120 may be an example of aspects of a communications manager 1020 as described herein. In some examples, the communications manager 1120, or various components thereof, may be configured to perform various operations (e.g., receiving, monitoring, transmitting) using or otherwise in cooperation with the receiver 1110, the transmitter 1115, or both. For example, the communications manager 1120 may receive information from the receiver 1110, send information to the transmitter 1115, or be integrated in combination with the receiver 1110, the transmitter 1115, or both to receive information, transmit information, or perform various other operations as described herein.

The communications manager 1120 may support wireless communications at a base station in accordance with examples as disclosed herein. The UE loading determination component 1125 may be configured as or otherwise support a means for determining a degree of UE loading for at least one of a set of multiple reconfigurable reflective surfaces that are configured to assist in communications between the UE and the base station. The UE loading indication component 1130 may be configured as or otherwise support a means for transmitting, to a UE, an indication of the degree of UE loading for the at least one of the set of multiple reconfigurable reflective surfaces. The signal reception component 1135 may be configured as or otherwise support a means for receiving a signal from the UE via a reconfigurable reflective surface from the set of multiple reconfigurable reflective surfaces.

Additionally or alternatively, the communications manager 1120 may support wireless communications at a base station in accordance with examples as disclosed herein. The signal reception component 1135 may be configured as or otherwise support a means for receiving a first signal from a UE via a first reconfigurable reflective surface. The RIS usage indication component 1140 may be configured as or otherwise support a means for transmitting, to the UE, an indication for the UE to use a different reconfigurable reflective surface than the first reconfigurable reflective surface. The RIS reception component 1145 may be configured as or otherwise support a means for receiving a second signal from the UE via a second reconfigurable reflective surface based on the indication.

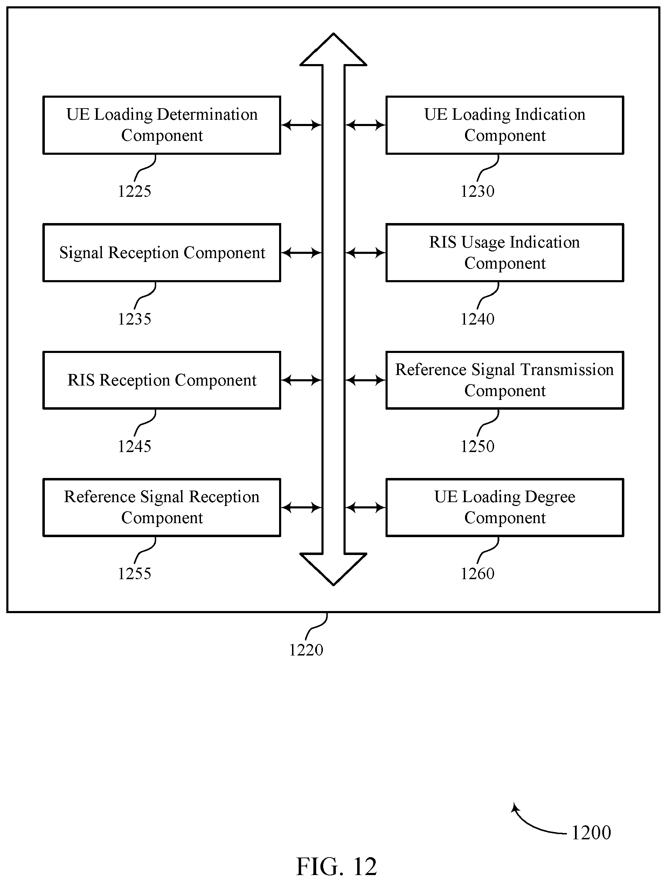

**FIG. 12** shows a block diagram 1200 of a communications manager 1220 that supports handover techniques associated with reconfigurable intelligent surfaces in accordance with aspects of the present disclosure. The communications manager 1220 may be an example of aspects of a communications manager 1020, a communications manager 1120, or both, as described herein. The communications manager 1220, or various components thereof, may be an example of means for performing various aspects of handover techniques associated with reconfigurable intelligent surfaces as described herein. For example, the communications manager 1220 may include a UE loading determination component 1225, a UE loading indication component 1230, a signal reception component 1235, a RIS usage indication component 1240, a RIS reception component 1245, a reference signal transmission component 1250, a reference signal reception component 1255, a UE loading degree component 1260, or any combination thereof. Each of these components may communicate, directly or indirectly, with one another (e.g., via one or more buses).

The communications manager 1220 may support wireless communications at a base station in accordance with examples as disclosed herein. The UE loading determination component 1225 may be configured as or otherwise support a means for determining a degree of UE loading for at least one of a set of multiple reconfigurable reflective surfaces that are configured to assist in communications between the UE and the base station. The UE loading indication component 1230 may be configured as or otherwise support a means for transmitting, to a UE, an indication of the degree of UE loading for the at least one of the set of multiple reconfigurable reflective surfaces. The signal reception component 1235 may be configured as or otherwise support a means for receiving a signal from the UE via a reconfigurable reflective surface from the set of multiple reconfigurable reflective surfaces.

In some examples, the UE loading indication component 1230 may be configured as or otherwise support a means for transmitting a quantity of bits, a combination of the quantity of bits indicating the degree of UE loading.

In some examples, a first combination indicates an idle degree of UE loading, a second combination indicates a low degree of UE loading which is greater than the idle degree of UE loading, a third combination indicates a medium degree of UE loading which is greater than the low degree of UE loading, and a fourth combination indicates a high degree of UE loading which is greater than the medium degree of UE loading.

In some examples, to support transmitting the indication of the degree of UE loading, the UE loading indication component 1230 may be configured as or otherwise support a means for transmitting a value indicating a number of UEs using each reconfigurable reflective surface of the at least one of the set of multiple reconfigurable reflective surfaces, the value indicating the degree of UE loading.

In some examples, to support transmitting the indication of the degree of UE loading, the UE loading indication component 1230 may be configured as or otherwise support a means for transmitting a value for modifying, by the UE, a RSRP measurement associated with the at least one of the set of multiple reconfigurable reflective surfaces, the value based on the degree of UE loading of the at least one of the set of multiple reconfigurable reflective surfaces.

In some examples, to support transmitting the indication of the degree of UE loading, the UE loading indication component 1230 may be configured as or otherwise support a means for transmitting an EPRE offset associated with using the at least one or the set of multiple reconfigurable reflective surfaces, a value of the EPRE offset based on the degree of UE loading of the at least one of the set of multiple reconfigurable reflective surfaces.

In some examples, the reference signal transmission component 1250 may be configured as or otherwise support a means for transmitting, to the UE, a reference signal include a sequence, where the sequence conveys the indication of the degree of UE loading.

In some examples, the reference signal is a demodulation reference signal or is included in a downlink control channel.

In some examples, a first sequence indicates an idle degree of UE loading, a second sequence indicates a low degree of UE loading, a third sequence indicates a medium degree of UE loading, and a fourth sequence indicates a high degree of UE loading.

In some examples, the reference signal reception component 1255 may be configured as or otherwise support a means for receiving a reference signal via the reconfigurable reflective surface, where transmitting the indication of the degree of UE loading is based on receiving the reference signal.

In some examples, to support transmitting the indication of the degree of UE loading, the UE loading indication component 1230 may be configured as or otherwise support a means for transmitting a message including the indication of the degree of UE loading, the message being a DCI message, an RRC message, or a MAC-CE message.

In some examples, to support transmitting the indication of the degree of UE loading, the UE loading indication component 1230 may be configured as or otherwise support a means for transmitting a reconfigurable reflective surface identifier associated with each degree of UE loading for the at least one of the set of multiple reconfigurable reflective surfaces included in the indication.

Additionally or alternatively, the communications manager 1220 may support wireless communications at a base station in accordance with examples as disclosed herein. In some examples, the signal reception component 1235 may be configured as or otherwise support a means for receiving a first signal from a UE via a first reconfigurable reflective surface. The RIS usage indication component 1240 may be configured as or otherwise support a means for transmitting, to the UE, an indication for the UE to use a different reconfigurable reflective surface than the first reconfigurable reflective surface. The RIS reception component 1245 may be configured as or otherwise support a means for receiving a second signal from the UE via a second reconfigurable reflective surface based on the indication.

In some examples, to support transmitting the indication, the RIS usage indication component 1240 may be configured as or otherwise support a means for transmitting a message including an indication of one or more reconfigurable reflective surfaces for the UE to switch to, each of the one or more reconfigurable reflective surfaces different than the first reconfigurable reflective surface.

In some examples, the UE loading degree component 1260 may be configured as or otherwise support a means for determining a degree of UE loading associated with the first reconfigurable reflective surface, where transmitting the indication is based on the degree of UE loading associated with the first reconfigurable reflective surface.

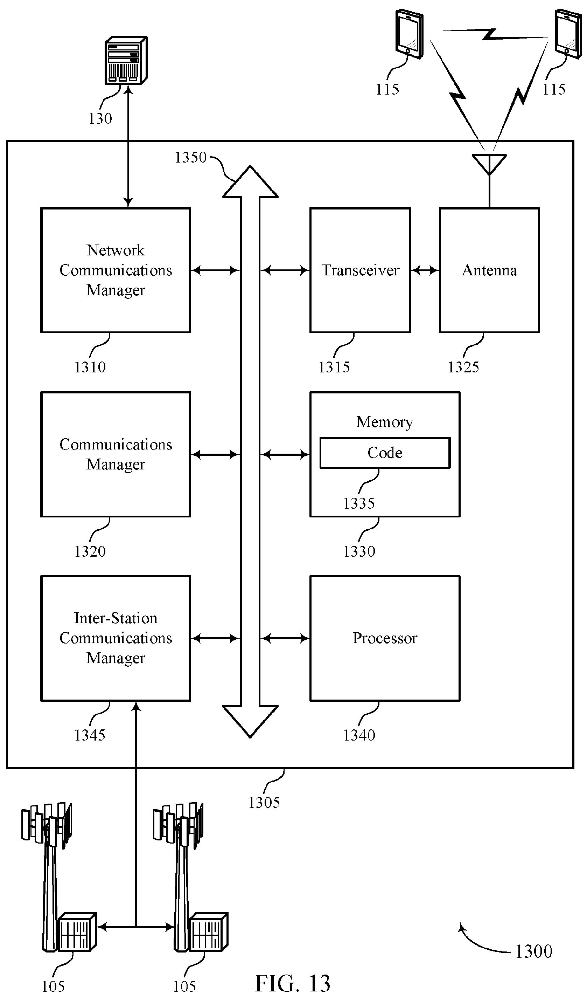

**FIG. 13** shows a diagram of a system 1300 including a device 1305 that supports handover techniques associated with reconfigurable intelligent surfaces in accordance with aspects of the present disclosure. The device 1305 may be an example of or include the components of a device 1005, a device 1105, or a base station 105 as described herein. The device 1305 may communicate wirelessly with one or more base stations 105, UEs 115, or any combination thereof. The device 1305 may include components for bi-directional voice and data communications including components for transmitting and receiving communications, such as a communications manager 1320, a network communications manager 1310, a transceiver 1315, an antenna 1325, a memory 1330, code 1335, a processor 1340, and an inter-station communications manager 1345. These components may be in electronic communication or otherwise coupled (e.g., operatively, communicatively, functionally, electronically, electrically) via one or more buses (e.g., a bus 1350).

The network communications manager 1310 may manage communications with a core network 130 (e.g., via one or more wired backhaul links). For example, the network communications manager 1310 may manage the transfer of data communications for client devices, such as one or more UEs 115.

In some cases, the device 1305 may include a single antenna 1325. However, in some other cases the device 1305 may have more than one antenna 1325, which may be capable of concurrently transmitting or receiving multiple wireless transmissions. The transceiver 1315 may communicate bi-directionally, via the one or more antennas 1325, wired, or wireless links as described herein. For example, the transceiver 1315 may represent a wireless transceiver and may communicate bi-directionally with another wireless transceiver. The transceiver 1315 may also include a modem to modulate the packets, to provide the modulated packets to one or more antennas 1325 for transmission, and to demodulate packets received from the one or more antennas 1325. The transceiver 1315, or the transceiver 1315 and one or more antennas 1325, may be an example of a transmitter 1015, a transmitter 1115, a receiver 1010, a receiver 1110, or any combination thereof or component thereof, as described herein.

The memory 1330 may include RAM and ROM. The memory 1330 may store computer-readable, computer-executable code 1335 including instructions that, when executed by the processor 1340, cause the device 1305 to perform various functions described herein. The code 1335 may be stored in a non-transitory computer-readable medium such as system memory or another type of memory. In some cases, the code 1335 may not be directly executable by the processor 1340 but may cause a computer (e.g., when compiled and executed) to perform functions described herein. In some cases, the memory 1330 may contain, among other things, a BIOS which may control basic hardware or software operation such as the interaction with peripheral components or devices.

The processor 1340 may include an intelligent hardware device (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some other cases, a memory controller may be integrated into the processor 1340. The processor 1340 may be configured to execute computer-readable instructions stored in a memory (e.g., the memory 1330) to cause the device 1305 to perform various functions (e.g., functions or tasks supporting handover techniques associated with reconfigurable intelligent surfaces). For example, the device 1305 or a component of the device 1305 may include a processor 1340 and memory 1330 coupled to the processor 1340, the processor 1340 and memory 1330 configured to perform various functions described herein.

The inter-station communications manager 1345 may manage communications with other base stations 105, and may include a controller or scheduler for controlling communications with UEs 115 in cooperation with other base stations 105. For example, the inter-station communications manager 1345 may coordinate scheduling for transmissions to UEs 115 for various interference mitigation techniques such as beamforming or joint transmission. In some examples, the inter-station communications manager 1345 may provide an X2 interface within an LTE/LTE-A wireless communications network technology to provide communication between base stations 105.

The communications manager 1320 may support wireless communications at a base station in accordance with examples as disclosed herein. For example, the communications manager 1320 may be configured as or otherwise support a means for determining a degree of UE loading for at least one of a set of multiple reconfigurable reflective surfaces that are configured to assist in communications between the UE and the base station. The communications manager 1320 may be configured as or otherwise support a means for transmitting, to a UE, an indication of the degree of UE loading for the at least one of the set of multiple reconfigurable reflective surfaces. The communications manager 1320 may be configured as or otherwise support a means for receiving a signal from the UE via a reconfigurable reflective surface from the set of multiple reconfigurable reflective surfaces.

Additionally or alternatively, the communications manager 1320 may support wireless communications at a base station in accordance with examples as disclosed herein. For example, the communications manager 1320 may be configured as or otherwise support a means for receiving a first signal from a UE via a first reconfigurable reflective surface. The communications manager 1320 may be configured as or otherwise support a means for transmitting, to the UE, an indication for the UE to use a different reconfigurable reflective surface than the first reconfigurable reflective surface. The communications manager 1320 may be configured as or otherwise support a means for receiving a second signal from the UE via a second reconfigurable reflective surface based on the indication.

By including or configuring the communications manager 1320 in accordance with examples as described herein, the device 1305 may support techniques for improved communication reliability, reduced latency, more efficient utilization of communication resources, and improved coordination between devices.

In some examples, the communications manager 1320 may be configured to perform various operations (e.g., receiving, monitoring, transmitting) using or otherwise in cooperation with the transceiver 1315, the one or more antennas 1325, or any combination thereof. Although the communications manager 1320 is illustrated as a separate component, in some examples, one or more functions described with reference to the communications manager 1320 may be supported by or performed by the processor 1340, the memory 1330, the code 1335, or any combination thereof. For example, the code 1335 may include instructions executable by the processor 1340 to cause the device 1305 to perform various aspects of handover techniques associated with reconfigurable intelligent surfaces as described herein, or the processor 1340 and the memory 1330 may be otherwise configured to perform or support such operations.

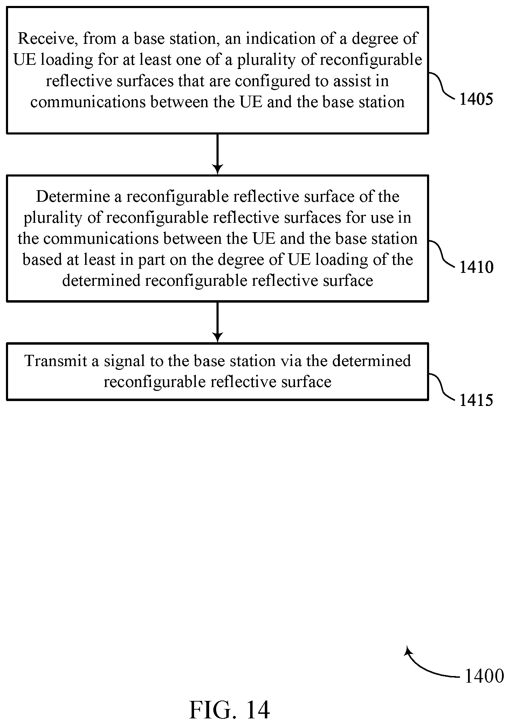

**FIG. 14** shows a flowchart illustrating a method 1400 that supports handover techniques associated with reconfigurable intelligent surfaces in accordance with aspects of the present disclosure. The operations of the method 1400 may be implemented by a UE or its components as described herein. For example, the operations of the method 1400 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1405, the method may include receiving, from a base station, an indication of a degree of UE loading for at least one of a set of multiple reconfigurable reflective surfaces that are configured to assist in communications between the UE and the base station. The operations of 1405 may be performed in accordance with examples as disclosed herein. In some examples, aspects of the operations of 1405 may be performed by a UE loading indication manager 825 as described with reference to FIG. 8.

At 1410, the method may include determining a reconfigurable reflective surface of the set of multiple reconfigurable reflective surfaces for use in the communications between the UE and the base station based on the degree of UE loading of the determined reconfigurable reflective surface. The operations of 1410 may be performed in accordance with examples as disclosed herein. In some examples, aspects of the operations of 1410 may be performed by a RIS selection manager 830 as described with reference to FIG. 8.

At 1415, the method may include transmitting a signal to the base station via the determined reconfigurable reflective surface. The operations of 1415 may be performed in accordance with examples as disclosed herein. In some examples, aspects of the operations of 1415 may be performed by a signal transmission manager 835 as described with reference to FIG. 8.

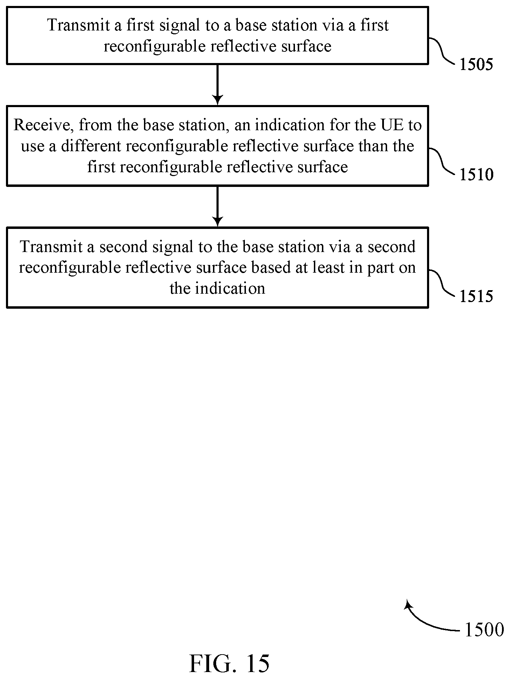

**FIG. 15** shows a flowchart illustrating a method 1500 that supports handover techniques associated with reconfigurable intelligent surfaces in accordance with aspects of the present disclosure. The operations of the method 1500 may be implemented by a UE or its components as described herein. For example, the operations of the method 1500 may be performed by a UE 115 as described with reference to FIGs. 1 through 9. In some examples, a UE may execute a set of instructions to control the functional elements of the UE to perform the described functions. Additionally or alternatively, the UE may perform aspects of the described functions using special-purpose hardware.

At 1505, the method may include transmitting a first signal to a base station via a first reconfigurable reflective surface. The operations of 1505 may be performed in accordance with examples as disclosed herein. In some examples, aspects of the operations of 1505 may be performed by a signal transmission manager 835 as described with reference to FIG. 8.

At 1510, the method may include receiving, from the base station, an indication for the UE to use a different reconfigurable reflective surface than the first reconfigurable reflective surface. The operations of 1510 may be performed in accordance with examples as disclosed herein. In some examples, aspects of the operations of 1510 may be performed by a RIS usage indication manager 840 as described with reference to FIG. 8.

At 1515, the method may include transmitting a second signal to the base station via a second reconfigurable reflective surface based on the indication. The operations of 1515 may be performed in accordance with examples as disclosed herein. In some examples, aspects of the operations of 1515 may be performed by a RIS transmission manager 845 as described with reference to FIG. 8.

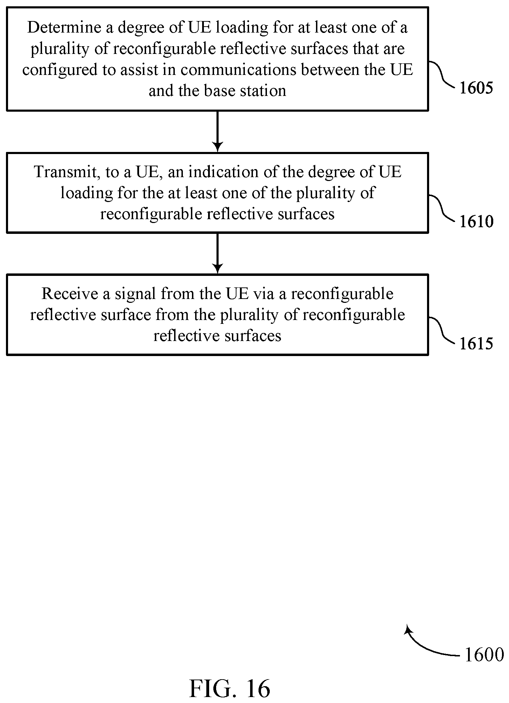

**FIG. 16** shows a flowchart illustrating a method 1600 that supports handover techniques associated with reconfigurable intelligent surfaces in accordance with aspects of the present disclosure. The operations of the method 1600 may be implemented by a base station or its components as described herein. For example, the operations of the method 1600 may be performed by a base station 105 as described with reference to FIGs. 1 through 5 and 10 through 13. In some examples, a base station may execute a set of instructions to control the functional elements of the base station to perform the described functions. Additionally or alternatively, the base station may perform aspects of the described functions using special-purpose hardware.

At 1605, the method may include determining a degree of UE loading for at least one of a set of multiple reconfigurable reflective surfaces that are configured to assist in communications between the UE and the base station. The operations of 1605 may be performed in accordance with examples as disclosed herein. In some examples, aspects of the operations of 1605 may be performed by a UE loading determination component 1225 as described with reference to FIG. 12.

At 1610, the method may include transmitting, to a UE, an indication of the degree of UE loading for the at least one of the set of multiple reconfigurable reflective surfaces. The operations of 1610 may be performed in accordance with examples as disclosed herein. In some examples, aspects of the operations of 1610 may be performed by a UE loading indication component 1230 as described with reference to FIG. 12.

At 1615, the method may include receiving a signal from the UE via a reconfigurable reflective surface from the set of multiple reconfigurable reflective surfaces. The operations of 1615 may be performed in accordance with examples as disclosed herein. In some examples, aspects of the operations of 1615 may be performed by a signal reception component 1235 as described with reference to FIG. 12.

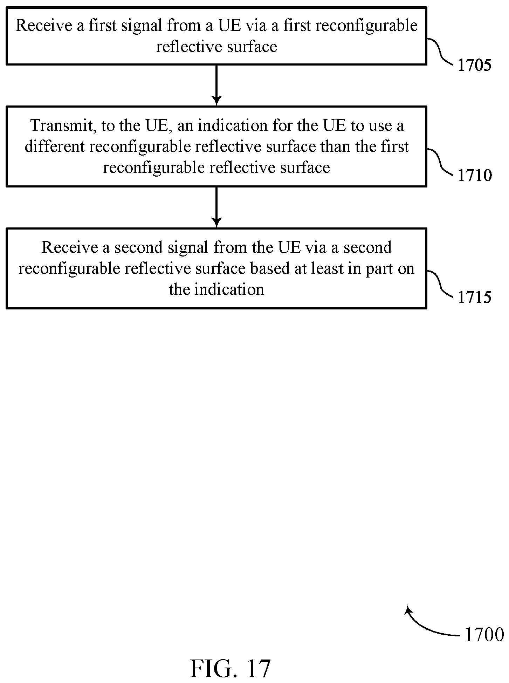

**FIG. 17** shows a flowchart illustrating a method 1700 that supports handover techniques associated with reconfigurable intelligent surfaces in accordance with aspects of the present disclosure. The operations of the method 1700 may be implemented by a base station or its components as described herein. For example, the operations of the method 1700 may be performed by a base station 105 as described with reference to FIGs. 1 through 5 and 10 through 13. In some examples, a base station may execute a set of instructions to control the functional elements of the base station to perform the described functions. Additionally or alternatively, the base station may perform aspects of the described functions using special-purpose hardware.

At 1705, the method may include receiving a first signal from a UE via a first reconfigurable reflective surface. The operations of 1705 may be performed in accordance with examples as disclosed herein. In some examples, aspects of the operations of 1705 may be performed by a signal reception component 1235 as described with reference to FIG. 12.

At 1710, the method may include transmitting, to the UE, an indication for the UE to use a different reconfigurable reflective surface than the first reconfigurable reflective surface. The operations of 1710 may be performed in accordance with examples as disclosed herein. In some examples, aspects of the operations of 1710 may be performed by a RIS usage indication component 1240 as described with reference to FIG. 12.

At 1715, the method may include receiving a second signal from the UE via a second reconfigurable reflective surface based on the indication. The operations of 1715 may be performed in accordance with examples as disclosed herein. In some examples, aspects of the operations of 1715 may be performed by a RIS reception component 1245 as described with reference to FIG. 12.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special-purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within the scope of computer-readable media.

As used herein, including in the claims, "or" as used in a list of items (e.g., a list of items prefaced by a phrase such as "at least one of" or "one or more of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on."

The term "determine" or "determining" encompasses a wide variety of actions and, therefore, "determining" can include calculating, computing, processing, deriving, investigating, looking up (such as via looking up in a table, a database or another data structure), ascertaining and the like. Also, "determining" can include receiving (such as receiving information), accessing (such as accessing data in a memory) and the like. Also, "determining" can include resolving, selecting, choosing, establishing and other such similar actions.

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The description set forth herein, in connection with the appended drawings, describes example configurations and does not represent all the examples that may be implemented or that are within the scope of the claims. The term "example" used herein means "serving as an example, instance, or illustration," and not "preferred" or "advantageous over other examples." The detailed description includes specific details for the purpose of providing an understanding of the described techniques. These techniques, however, may be practiced without these specific details. In some instances, known structures and devices are shown in block diagram form in order to avoid obscuring the concepts of the described examples.

## Claims

1. A method (1400) for wireless communications at a user equipment, UE, (115) comprising:
receiving (1405), from a base station, an indication of a degree of UE loading for at least one of a plurality of reconfigurable reflective surfaces that are configured to assist in communications between the UE and the base station;
determining (1410) a reconfigurable reflective surface of the plurality of reconfigurable reflective surfaces for use in the communications between the UE and the base station based at least in part on the degree of UE loading of the determined reconfigurable reflective surface; and
transmitting (1415) a signal to the base station via the determined reconfigurable reflective surface.

2. The method of claim 1, wherein receiving the indication of the degree of UE loading further comprises:
receiving a quantity of bits, a combination of the quantity of bits indicating the degree of UE loading;
preferably, wherein a first combination indicates an idle degree of UE loading, a second combination indicates a low degree of UE loading which is greater than the idle degree of UE loading, a third combination indicates a medium degree of UE loading which is greater than the low degree of UE loading, and a fourth combination indicates a high degree of UE loading which is greater than the medium degree of UE loading.

3. The method of claim 1, wherein receiving the indication of the degree of UE loading further comprises:
receiving a value indicating a number of UEs using each reconfigurable reflective surface of the at least one of the plurality of reconfigurable reflective surfaces, the value indicating the degree of UE loading; or
the method of claim 1, wherein receiving the indication of the degree of UE loading further comprises:
receiving a value for modifying, by the UE, a reference signal received power measurement associated with the at least one of the plurality of reconfigurable reflective surfaces, the value based at least in part on the degree of UE loading of the at least one of the plurality of reconfigurable reflective surfaces; or
the method of claim 1, wherein receiving the indication of the degree of UE loading further comprises:
receiving an energy per resource element offset associated with using the at least one or the plurality of reconfigurable reflective surfaces, a value of the energy per resource element offset based at least in part on the degree of UE loading of the at least one of the plurality of reconfigurable reflective surfaces.

4. The method of claim 1, further comprising:
receiving, from the base station, a reference signal comprising a sequence, wherein the sequence conveys the indication of the degree of UE loading; and
preferably, wherein the reference signal is a demodulation reference signal or is included in a downlink control channel; or
preferably, wherein a first sequence indicates an idle degree of UE loading, a second sequence indicates a low degree of UE loading, a third sequence indicates a medium degree of UE loading, and a fourth sequence indicates a high degree of UE loading.

5. The method of claim 1, further comprising:
transmitting a reference signal to the reconfigurable reflective surface, wherein
receiving the indication of the degree of UE loading is based at least in part on transmitting the reference signal; or
the method of claim 1, wherein receiving the indication of the degree of UE loading further comprises:
receiving a message comprising the indication of the degree of UE loading, the message being a downlink control information message, a radio resource control message, or a medium access control element message; or
the method of claim 1, wherein determining the reconfigurable reflective surface further comprises:
identifying a degree of UE loading less than a high degree of UE loading from the indication;
identifying the reconfigurable reflective surface associated with the degree of UE loading that is less than the high degree of UE loading, wherein determining the reconfigurable reflective surface is based at least in part on the determined reconfigurable reflective surface having the degree of UE loading that is less than the high degree of UE loading; or
the method of claim 1, wherein receiving the indication of the degree of UE loading further comprises:
receiving a reconfigurable reflective surface identifier associated with each degree of UE loading for the at least one of the plurality of reconfigurable reflective surfaces included in the indication.

6. A method (1600) for wireless communications at a base station (105), comprising:
determining (1605) a degree of user equipment, UE, loading for at least one of a plurality of reconfigurable reflective surfaces that are configured to assist in communications between the UE and the base station;
transmitting (1610), to a UE, an indication of the degree of UE loading for the at least one of the plurality of reconfigurable reflective surfaces; and
receiving (1615) a signal from the UE via a reconfigurable reflective surface from the plurality of reconfigurable reflective surfaces.

7. The method of claim 6, wherein transmitting the indication of the degree of UE loading further comprises:
transmitting a quantity of bits, a combination of the quantity of bits indicating the degree of UE loading.
preferably, wherein a first combination indicates an idle degree of UE loading, a second combination indicates a low degree of UE loading which is greater than the idle degree of UE loading, a third combination indicates a medium degree of UE loading which is greater than the low degree of UE loading, and a fourth combination indicates a high degree of UE loading which is greater than the medium degree of UE loading; or
the method of claim 6, wherein transmitting the indication of the degree of UE loading further comprises:
transmitting a value indicating a number of UEs using each reconfigurable reflective surface of the at least one of the plurality of reconfigurable reflective surfaces, the value indicating the degree of UE loading; or
the method of claim 6, wherein transmitting the indication of the degree of UE loading further comprises:
transmitting a value for modifying, by the UE, a reference signal received power measurement associated with the at least one of the plurality of reconfigurable reflective surfaces, the value based at least in part on the degree of UE loading of the at least one of the plurality of reconfigurable reflective surfaces; or
the method of claim 6, wherein transmitting the indication of the degree of UE loading further comprises:
transmitting an energy per resource element offset associated with using the at least one or the plurality of reconfigurable reflective surfaces, a value of the energy per resource element offset based at least in part on the degree of UE loading of the at least one of the plurality of reconfigurable reflective surfaces.

8. The method of claim 6, further comprising:
transmitting, to the UE, a reference signal comprising a sequence, wherein the sequence conveys the indication of the degree of UE loading.

9. The method of claim 8, wherein the reference signal is a demodulation reference signal or is included in a downlink control channel; or
wherein a first sequence indicates an idle degree of UE loading, a second sequence indicates a low degree of UE loading, a third sequence indicates a medium degree of UE loading, and a fourth sequence indicates a high degree of UE loading.

10. The method of claim 6, further comprising:
receiving a reference signal via the reconfigurable reflective surface, wherein
transmitting the indication of the degree of UE loading is based at least in part on receiving the reference signal.

11. The method of claim 6, wherein transmitting the indication of the degree of UE loading further comprises:
transmitting a message comprising the indication of the degree of UE loading, the message being a downlink control information message, a radio resource control message, or a medium access control element message; or
the method of claim 6, wherein transmitting the indication of the degree of UE loading further comprises:
transmitting a reconfigurable reflective surface identifier associated with each degree of UE loading for the at least one of the plurality of reconfigurable reflective surfaces included in the indication.

12. An apparatus for wireless communication at a UE (115), comprising at least one means configured to perform the method of any one of claims 1-5.

13. An apparatus for wireless communication at a base station (105), comprising at least one means configured to perform the method of any one of claims 6-11.

14. A computer program comprising instructions, which when executed by a processor of a UE, cause the UE to perform the method (1400) of any one of claims 1-5 or when executed by a processor of a base station, cause the base station to perform the method (1600) of any one of claims 6-11.

## Patentansprüche

1. Verfahren (1400) für drahtlose Kommunikationen an einem Benutzergerät, UE, (115), umfassend:
Empfangen (1405), von einer Basisstation, einer Angabe eines UE-Auslastungsgrads für mindestens eine einer Vielzahl von neukonfigurierbaren reflektierenden Oberflächen, die konfiguriert sind, um Kommunikationen zwischen dem UE und der Basisstation zu unterstützen;
Bestimmen (1410) einer neukonfigurierbaren reflektierenden Oberfläche der Vielzahl von neukonfigurierbaren reflektierenden Oberflächen zur Verwendung in den Kommunikationen zwischen dem UE und der Basisstation basierend mindestens teilweise auf dem UE-Auslastungsgrad der bestimmten neukonfigurierbaren reflektierenden Oberfläche; und
Übertragen (1415) eines Signals an die Basisstation über die bestimmte neukonfigurierbare reflektierende Oberfläche.

2. Verfahren nach Anspruch 1, wobei das Empfangen der Angabe des UE-Auslastungsgrads ferner umfasst:
Empfangen einer Menge von Bits, wobei eine Kombination der Menge von Bits den UE-Auslastungsgrad angibt;
wobei vorzugsweise eine erste Kombination einen Leerlauf-UE-Auslastungsgrad angibt, eine zweite Kombination einen niedrigen UE-Auslastungsgrad angibt, der größer als der Leerlauf-UE-Auslastungsgrad ist, eine dritte Kombination einen mittleren UE-Auslastungsgrad angibt, der größer als der niedrige UE-Auslastungsgrad ist, und eine vierte Kombination einen hohen UE-Auslastungsgrad angibt, der größer als der mittlere UE-Auslastungsgrad ist.

3. Verfahren nach Anspruch 1, wobei das Empfangen der Angabe des UE-Auslastungsgrads ferner umfasst:
Empfangen eines Werts, der eine Anzahl von UEs unter Verwendung jeder neukonfigurierbaren reflektierenden Oberfläche der mindestens einen der Vielzahl von neukonfigurierbaren reflektierenden Oberflächen angibt, wobei der Wert den UE-Auslastungsgrad angibt; oder
Verfahren nach Anspruch 1, wobei das Empfangen der Angabe des UE-Auslastungsgrads ferner umfasst:
Empfangen eines Werts zum Modifizieren, durch das UE, einer Referenzsignal-Empfangsleistungsmessung, die mit der mindestens einen der Vielzahl von neukonfigurierbaren reflektierenden Oberflächen assoziiert ist, wobei der Wert mindestens teilweise auf dem UE-Auslastungsgrad der mindestens einen der Vielzahl von neukonfigurierbaren reflektierenden Oberflächen basiert; oder
Verfahren nach Anspruch 1, wobei das Empfangen der Angabe des UE-Auslastungsgrads ferner umfasst:
Empfangen eines Energie-pro-Ressourcenelement-Versatzes, der mit der Verwendung der mindestens einen oder der Vielzahl von neukonfigurierbaren reflektierenden Oberflächen assoziiert ist, wobei ein Wert des Energie-pro-Ressourcenelement-Versatzes mindestens teilweise auf dem UE-Auslastungsgrad der mindestens einen der Vielzahl von neukonfigurierbaren reflektierenden Oberflächen basiert.

4. Verfahren nach Anspruch 1, ferner umfassend:
Empfangen, von der Basisstation, eines Referenzsignals, das eine Sequenz umfasst, wobei die Sequenz die Angabe des UE-Auslastungsgrads übermittelt; und
wobei vorzugsweise das Referenzsignal ein Demodulationsreferenzsignal ist oder in einem Downlink-Steuerkanal enthalten ist; oder
wobei vorzugsweise eine erste Sequenz einen Leerlauf-UE-Auslastungsgrad angibt, eine zweite Sequenz einen niedrigen UE-Auslastungsgrad angibt, eine dritte Sequenz einen mittleren UE-Auslastungsgrad angibt und eine vierte Sequenz einen hohen UE-Auslastungsgrad angibt.

5. Verfahren nach Anspruch 1, ferner umfassend:
Übertragen eines Referenzsignals an die neukonfigurierbare reflektierende Oberfläche, wobei das Empfangen der Angabe des UE-Auslastungsgrads mindestens teilweise auf dem Übertragen des Referenzsignals basiert; oder
Verfahren nach Anspruch 1, wobei das Empfangen der Angabe des UE-Auslastungsgrads ferner umfasst:
Empfangen einer Nachricht, die die Angabe des UE-Auslastungsgrads umfasst, wobei die Nachricht eine Downlink-Steuerinformationsnachricht, eine Funkressourcensteuernachricht oder eine Medienzugriffssteuerelementnachricht ist; oder
Verfahren nach Anspruch 1, wobei das Bestimmen der neukonfigurierbaren reflektierenden Oberfläche ferner umfasst:
Identifizieren eines UE-Auslastungsgrads, der niedriger als ein hoher UE-Auslastungsgrad ist, aus der Angabe;
Identifizieren der neukonfigurierbaren reflektierenden Oberfläche, die dem UE-Auslastungsgrad zugeordnet ist, der niedriger als der hohe UE-Auslastungsgrad ist, wobei das Bestimmen der neukonfigurierbaren reflektierenden Oberfläche mindestens teilweise darauf basiert, dass die bestimmte neukonfigurierbare reflektierende Oberfläche den UE-Auslastungsgrad aufweist, der niedriger als der hohe UE-Auslastungsgrad ist; oder
Verfahren nach Anspruch 1, wobei das Empfangen der Angabe des UE-Auslastungsgrads ferner umfasst:
Empfangen einer neukonfigurierbaren reflektierenden Oberflächenkennung, die jedem UE-Auslastungsgrad für die mindestens eine der Vielzahl von neukonfigurierbaren reflektierenden Oberflächen zugeordnet ist, die in der Angabe enthalten sind.

6. Verfahren (1600) für drahtlose Kommunikationen an einer Basisstation (105), umfassend:
Bestimmen (1605) eines Benutzergerät-, UE-, Auslastungsgrads für mindestens eine einer Vielzahl von neukonfigurierbaren reflektierenden Oberflächen, die konfiguriert sind, um Kommunikationen zwischen dem UE und der Basisstation zu unterstützen;
Übertragen (1610), an ein UE, einer Angabe des UE-Auslastungsgrads für die mindestens eine der Vielzahl von neukonfigurierbaren reflektierenden Oberflächen; und
Empfangen (1615) eines Signals von dem UE über eine neukonfigurierbare reflektierende Oberfläche von der Vielzahl von neukonfigurierbaren reflektierenden Oberflächen.

7. Verfahren nach Anspruch 6, wobei das Übertragen der Angabe des UE-Auslastungsgrads ferner umfasst:
Übertragen einer Menge von Bits, wobei eine Kombination der Menge von Bits den UE-Auslastungsgrad angibt,
wobei vorzugsweise eine erste Kombination einen Leerlauf-UE-Auslastungsgrad angibt, eine zweite Kombination einen niedrigen UE-Auslastungsgrad angibt, der größer als der Leerlauf-UE-Auslastungsgrad ist, eine dritte Kombination einen mittleren UE-Auslastungsgrad angibt, der größer als der niedrige UE-Auslastungsgrad ist, und eine vierte Kombination einen hohen UE-Auslastungsgrad angibt, der größer als der mittlere UE-Auslastungsgrad ist; oder
Verfahren nach Anspruch 6, wobei das Übertragen der Angabe des UE-Auslastungsgrads ferner umfasst:
Übertragen eines Werts, der eine Anzahl von DEs unter Verwendung jeder neukonfigurierbaren reflektierenden Oberfläche der mindestens einen der Vielzahl von neukonfigurierbaren reflektierenden Oberflächen angibt, wobei der Wert den UE-Auslastungsgrad angibt; oder
Verfahren nach Anspruch 6, wobei das Übertragen der Angabe des UE-Auslastungsgrads ferner umfasst:
Übertragen eines Werts zum Modifizieren, durch das UE, einer Referenzsignal-Empfangsleistungsmessung, die mit der mindestens einen der Vielzahl von neukonfigurierbaren reflektierenden Oberflächen assoziiert ist, wobei der Wert mindestens teilweise auf dem UE-Auslastungsgrad der mindestens einen der Vielzahl von neukonfigurierbaren reflektierenden Oberflächen basiert; oder
Verfahren nach Anspruch 6, wobei das Übertragen der Angabe des UE-Auslastungsgrads ferner umfasst:
Übertragen eines Energie-pro-Ressourcenelement-Versatzes, der mit der Verwendung der mindestens einen oder der Vielzahl von neukonfigurierbaren reflektierenden Oberflächen assoziiert ist, wobei ein Wert des Energie-pro-Ressourcenelement-Versatzes mindestens teilweise auf dem UE-Auslastungsgrad der mindestens einen der Vielzahl von neukonfigurierbaren reflektierenden Oberflächen basiert.

8. Verfahren nach Anspruch 6, ferner umfassend:
Übertragen, an das UE, eines Referenzsignals, das eine Sequenz umfasst, wobei die Sequenz die Angabe des UE-Auslastungsgrads übermittelt.

9. Verfahren nach Anspruch 8, wobei das Referenzsignal ein Demodulationsreferenzsignal ist oder in einem Downlink-Steuerkanal enthalten ist; oder
wobei eine erste Sequenz einen Leerlauf-UE-Auslastungsgrad angibt, eine zweite Sequenz einen niedrigen UE-Auslastungsgrad angibt, eine dritte Sequenz einen mittleren UE-Auslastungsgrad angibt und eine vierte Sequenz einen hohen UE-Auslastungsgrad angibt.

10. Verfahren nach Anspruch 6, ferner umfassend:
Empfangen eines Referenzsignals über die neukonfigurierbare reflektierende Oberfläche, wobei das Übertragen der Angabe des UE-Auslastungsgrads mindestens teilweise auf dem Empfangen des Referenzsignals basiert.

11. Verfahren nach Anspruch 6, wobei das Übertragen der Angabe des UE-Auslastungsgrads ferner umfasst:
Übertragen einer Nachricht, die die Angabe des UE-Auslastungsgrads umfasst, wobei die Nachricht eine Downlink-Steuerinformationsnachricht, eine Funkressourcensteuernachricht oder eine Medienzugriffssteuerelementnachricht ist; oder
Verfahren nach Anspruch 6, wobei das Übertragen der Angabe des UE-Auslastungsgrads ferner umfasst:
Übertragen einer neukonfigurierbaren reflektierenden Oberflächenkennung, die jedem UE-Auslastungsgrad für die mindestens eine der Vielzahl von neukonfigurierbaren reflektierenden Oberflächen zugeordnet ist, die in der Angabe enthalten sind.

12. Vorrichtung für drahtlose Kommunikation an einem UE (115), umfassend mindestens ein Mittel, das konfiguriert ist, um das Verfahren nach einem der Ansprüche 1-5 durchzuführen.

13. Vorrichtung für drahtlose Kommunikation an einer Basisstation (105), umfassend mindestens ein Mittel, das konfiguriert ist, um das Verfahren nach einem der Ansprüche 6-11 durchzuführen.

14. Computerprogramm, umfassend Anweisungen, die, wenn sie von einem Prozessor eines UE ausgeführt werden, das UE veranlassen, das Verfahren (1400) nach einem der Ansprüche 1-5 durchzuführen, oder, wenn sie von einem Prozessor einer Basisstation ausgeführt werden, die Basisstation veranlassen, das Verfahren (1600) nach einem der Ansprüche 6-11 durchzuführen.

## Revendications

1. Un procédé (1400) de communication sans fil au niveau d'un équipement utilisateur, UE (115), comprenant :
la réception (1405), à partir d'une station de base, d'une indication d'un degré de charge d'UE pour au moins l'une d'une pluralité de surfaces réfléchissantes reconfigurables qui sont configurées pour aider dans les communications entre l'UE et la station de base ;
la détermination (1410) d'une surface réfléchissante reconfigurable de la pluralité de surfaces réfléchissantes reconfigurables pour une utilisation dans les communications entre l'UE et la station de base sur la base au moins en partie du degré de charge d'UE de la surface réfléchissante reconfigurable déterminée ; et
la transmission (1415) d'un signal à la station de base via la surface réfléchissante reconfigurable déterminée.

2. Le procédé selon la revendication 1, dans lequel la réception de l'indication du degré de charge d'UE comprend en outre :
la réception d'une quantité de bits, une combinaison de la quantité de bits indiquant le degré de charge d'UE ;
de préférence dans lequel une première combinaison indique un degré de charge d'UE au repos, une deuxième combinaison indique un degré de charge d'UE faible qui est supérieur au degré de charge d'UE au repos, une troisième combinaison indique un degré de charge d'UE moyen qui est supérieur au degré de charge d'UE faible, et une quatrième combinaison indique un degré de charge d'UE élevé qui est supérieur au degré de charge d'UE moyen.

3. Le procédé selon la revendication 1, dans lequel la réception de l'indication du degré de charge d'UE comprend en outre :
la réception d'une valeur indiquant un nombre d'UE utilisant chaque surface réfléchissante reconfigurable de l'au moins une de la pluralité de surfaces réfléchissantes reconfigurables, la valeur indiquant le degré de charge d'UE ; ou
le procédé selon la revendication 1, dans lequel la réception de l'indication du degré de charge d'UE comprend en outre :
la réception d'une valeur pour la modification, par l'UE, d'une mesure de puissance reçue de signal de référence associée à l'au moins une de la pluralité de surfaces réfléchissantes reconfigurables, la valeur étant basée au moins en partie sur le degré de charge d'UE de l'au moins une de la pluralité de surfaces réfléchissantes reconfigurables ; ou
le procédé selon la revendication 1, dans lequel la réception de l'indication du degré de charge d'UE comprend en outre :
la réception d'un décalage d'énergie par élément de ressource associé à l'utilisation de l'au moins une ou de la pluralité de surfaces réfléchissantes reconfigurables, une valeur du décalage d'énergie par élément de ressource étant basée au moins en partie sur le degré de charge d'UE de l'au moins une de la pluralité de surfaces réfléchissantes reconfigurables.

4. Le procédé selon la revendication 1, comprenant en outre :
la réception, à partir de la station de base, d'un signal de référence comprenant une séquence, dans lequel la séquence transporte l'indication du degré de charge d'UE ; et
de préférence dans lequel le signal de référence est un signal de référence de démodulation ou est inclus dans un canal de contrôle de liaison descendante ; ou
de préférence dans lequel une première séquence indique un degré de charge d'UE au repos, une deuxième séquence indique un degré de charge d'UE faible, une troisième séquence indique un degré de charge d'UE moyen, et une quatrième séquence indique un degré de charge d'UE élevé.

5. Le procédé selon la revendication 1, comprenant en outre :
la transmission d'un signal de référence à la surface réfléchissante reconfigurable, dans lequel la réception de l'indication du degré de charge d'UE est basée au moins en partie sur la transmission du signal de référence ; ou
le procédé selon la revendication 1, dans lequel la réception de l'indication du degré de charge d'UE comprend en outre :
la réception d'un message comprenant l'indication du degré de charge d'UE, le message étant un message d'information de contrôle de liaison descendante, un message de contrôle de ressource radio, ou un message d'élément de contrôle d'accès au support ; ou
le procédé selon la revendication 1, dans lequel la détermination de la surface réfléchissante reconfigurable comprend en outre :
l'identification d'un degré de charge d'UE inférieur à un degré de charge d'UE élevé à partir de l'indication ;
l'identification de la surface réfléchissante reconfigurable associée au degré de charge d'UE qui est inférieur au degré de charge d'UE élevé, dans lequel la détermination de la surface réfléchissante reconfigurable est basée au moins en partie sur la surface réfléchissante reconfigurable déterminée ayant le degré de charge d'UE qui est inférieur au degré de charge d'UE élevé ; ou
le procédé selon la revendication 1, dans lequel la réception de l'indication du degré de charge d'UE comprend en outre :
la réception d'un identifiant de surface réfléchissante reconfigurable associé à chaque degré de charge d'UE pour l'au moins une de la pluralité de surfaces réfléchissantes reconfigurables incluse dans l'indication.

6. Un procédé (1600) de communication sans fil au niveau d'une station de base (105), comprenant :
la détermination (1605) d'un degré de charge d'équipement utilisateur, UE, pour au moins l'une d'une pluralité de surfaces réfléchissantes reconfigurables qui sont configurées pour aider dans les communications entre l'UE et la station de base ;
la transmission (1610), à un UE, d'une indication du degré de charge d'UE pour l'au moins une de la pluralité de surfaces réfléchissantes reconfigurables ; et
la réception (1615) d'un signal à partir de l'UE via une surface réfléchissante reconfigurable parmi la pluralité de surfaces réfléchissantes reconfigurables.

7. Le procédé selon la revendication 6, dans lequel la transmission de l'indication du degré de charge d'UE comprend en outre :
la transmission d'une quantité de bits, une combinaison de la quantité de bits indiquant le degré de charge d'UE,
de préférence dans lequel une première combinaison indique un degré de charge d'UE au repos, une deuxième combinaison indique un degré de charge d'UE faible qui est supérieur au degré de charge d'UE au repos, une troisième combinaison indique un degré de charge d'UE moyen qui est supérieur au degré de charge d'UE faible, et une quatrième combinaison indique un degré de charge d'UE élevé qui est supérieur au degré de charge d'UE moyen ; ou
le procédé selon la revendication 6, dans lequel la transmission de l'indication du degré de charge d'UE comprend en outre :
la transmission d'une valeur indiquant un nombre d'UE utilisant chaque surface réfléchissante reconfigurable de l'au moins une de la pluralité de surfaces réfléchissantes reconfigurables, la valeur indiquant le degré de charge d'UE ; ou
le procédé selon la revendication 6, dans lequel la transmission de l'indication du degré de charge d'UE comprend en outre :
la transmission d'une valeur pour la modification, par l'UE, d'une mesure de puissance reçue de signal de référence associée à l'au moins une de la pluralité de surfaces réfléchissantes reconfigurables, la valeur étant basée au moins en partie sur le degré de charge d'UE de l'au moins une de la pluralité de surfaces réfléchissantes reconfigurables ; ou
le procédé selon la revendication 6, dans lequel la transmission de l'indication du degré de charge d'UE comprend en outre :
la transmission d'un décalage d'énergie par élément de ressource associé à l'utilisation de l'au moins une ou de la pluralité de surfaces réfléchissantes reconfigurables, une valeur du décalage d'énergie par élément de ressource étant basée au moins en partie sur le degré de charge d'UE de l'au moins une de la pluralité de surfaces réfléchissantes reconfigurables.

8. Le procédé selon la revendication 6, comprenant en outre :
la transmission, à l'UE, d'un signal de référence comprenant une séquence, dans lequel la séquence transporte l'indication du degré de charge d'UE.

9. Le procédé selon la revendication 8, dans lequel le signal de référence est un signal de référence de démodulation ou est inclus dans un canal de contrôle de liaison descendante ; ou
dans lequel une première séquence indique un degré de charge d'UE au repos, une deuxième séquence indique un degré de charge d'UE faible, une troisième séquence indique un degré de charge d'UE moyen, et une quatrième séquence indique un degré de charge d'UE élevé.

10. Le procédé selon la revendication 6, comprenant en outre :
la réception d'un signal de référence via la surface réfléchissante reconfigurable, dans lequel la transmission de l'indication du degré de charge d'UE est basée au moins en partie sur la réception du signal de référence.

11. Le procédé selon la revendication 6, dans lequel la transmission de l'indication du degré de charge d'UE comprend en outre :
la transmission d'un message comprenant l'indication du degré de charge d'UE, le message étant un message d'information de contrôle de liaison descendante, un message de contrôle de ressource radio, ou un message d'élément de contrôle d'accès au support ; ou
le procédé selon la revendication 6, dans lequel la transmission de l'indication du degré de charge d'UE comprend en outre :
la transmission d'un identifiant de surface réfléchissante reconfigurable associé à chaque degré de chargement d'UE pour l'au moins une de la pluralité de surfaces réfléchissantes reconfigurables incluse dans l'indication.

12. Un appareil pour la communication sans fil au niveau d'un UE (115), comprenant au moins un moyen configuré pour réaliser le procédé selon l'une des revendications 1 à 5.

13. Un appareil pour la communication sans fil au niveau d'une station de base (105), comprenant au moins un moyen configuré pour réaliser le procédé selon l'une des revendications 6 à 11.

14. Un programme de calculateur comprenant des instructions qui, lorsqu'elles sont exécutées par un processeur d'un UE, amènent l'UE à réaliser le procédé (1400) selon l'une des revendications 1 à 5, ou, lorsqu'elles sont exécutées par un processeur d'une station de base, amènent la station de base à réaliser le procédé (1600) selon l'une des revendications 6 à 11.
